# EUROPEAN PATENT SPECIFICATION

(11) **EP 4 695 199 B1**
(45) Date of publication and mention of the grant of the patent: **28.10.2026**
(21) Application number: 24746260.9
(22) Date of filing: 18.07.2024
(51) Int. Cl.: C01B 3/32, C10J 3/00, C10J 3/72

(54) **SYSTEM AND METHOD FOR CONTROLLING THE BIOGENIC CARBON CONTENT OF A CHEMICAL PRODUCT**
SYSTEM UND VERFAHREN ZUR STEUERUNG DES BIOGENEN KOHLENSTOFFGEHALTS EINES CHEMISCHEN PRODUKTS
SYSTÈME ET PROCÉDÉ DE RÉGULATION DE LA TENEUR EN CARBONE BIOGÈNE D'UN PRODUIT CHIMIQUE

(30) Priority: 31.07.2023 EP 23188698
(43) Date of publication of application: 18.02.2026
(73) Proprietor: BASF SE, 67056 Ludwigshafen am Rhein (DE)
(72) Inventor: HORST, Thomas, 67056 Ludwigshafen am Rhein (DE); STROBEL, Paul-Vinzent, 67056 Ludwigshafen am Rhein (DE); KOCH, Oliver, 67056 Ludwigshafen am Rhein (DE); BADER, Andre, 67056 Ludwigshafen am Rhein (DE); HARNISCHMACHER, Gerrit, 67056 Ludwigshafen am Rhein (DE); VON HARBOU, Inga, 67056 Ludwigshafen am Rhein (DE); AL SHAAL, Mohammad Ghith, 67056 Ludwigshafen am Rhein (DE)
(74) Representative: BASF IP Association
(86) International application number: PCT/EP2024/070346
(87) International publication number: WO 2025/026748

(56) References cited:
- WO-A1-2017/011025
- WO-A1-2022/084436
- WO-A1-2022/172181

## Description

### Technical Area

The present invention relates to a system and a method for controlling biogenic carbon content in at least one chemical product made from syngas.

### Background of the Invention

The production of chemical products having a biogenic carbon content from hydrocarbon feedstocks comprising biogenic carbon is becoming increasingly important for a sustainable and green chemical industry. In case a chemical product is produced from a single hydrocarbon feedstock said chemical product has the same biogenic carbon content as said hydrocarbon feedstock. Hence, a single hydrocarbon feedstock comprising biogenic carbon leads to a chemical product having about the same biogenic carbon content as said feedstock. On the other hand, a chemical product produced from a single hydrocarbon feedstock having a fossil origin, the biogenic carbon content in the chemical product is essentially zero.

Suitable hydrocarbon feedstocks comprising biogenic carbon may have an undefined biogenic carbon content based on their total mass e.g., when contaminated with substances of fossil origin such as mineral oils and plastic waste and/or having varying levels of moisture. Another source for an undefined biogenic carbon content in a hydrocarbon feedstock is a seasonal variation in composition of a given hydrocarbon feedstock. Examples for a seasonal variation in composition include the plastic content, amount of food residues, amount of gardening and/or other biomass in municipal solid waste.

Another source for an undefined biogenic carbon content of a feedstock derives from mixed feedstocks. Mixing of a hydrocarbon feedstock comprising biogenic carbon with one or more other hydrocarbon feedstocks which are fossil based or mixtures of components comprising biogenic carbon, and which are free of biogenic carbon is an example for this scenario. Such feedstock mixing is required when the amounts of hydrocarbon feedstocks comprising biogenic carbon is unstable because of e.g., seasonal effects or availability in sufficient quantity for a target product volume of a chemical product.

A continuous production of chemical products having a target biogenic carbon content is desired which requires a continuous supply and feeding of feedstock(s) from which the chemical product is made into the process and production units. Hence, the continuous production of a chemical product having a target biogenic carbon content from a feedstock having an undefined biogenic carbon content is a challenge, especially in the continuous production of base chemicals such as methanol and downstream products and "synthetic" methane in large quantities. As well as Fischer-Tropsch hydrocarbons and downstream products.

The determination of the biogenic carbon content in solid or mainly solid hydrocarbon feedstocks is usually not feasible, because such feedstocks often have an inhomogeneous spatial distribution of biogenic carbon which leads to high errors even when taking several random samples from such a feedstock. Examples of such hydrocarbon feedstocks comprise biomass, biomass residues, mixed plastic waste, municipal solid waste, liquid waste (for example from chemical processes), and refuse derived fuel (RDF).

A biomass co-combustion ratio monitoring system and method based on ¹⁴C isotope online detection is disclosed in CN 10805163 A. Flue gas is extracted from the flue of an incineration boiler. The system and method are applicable in the field of energy conversion from mixed feedstocks.

A radiocarbon (¹⁴C) monitoring device for liquid and gaseous substances is disclosed in KR 10-2022-0058093 A. The device is small in volume, easy to move and suitable for accurate and quick radiocarbon measurements performed on the samples taken in situ.

A method for the manufacture and use of a green product is disclosed in EP 2 695 909 A1. The method comprises the steps a) producing or buying the green product and b) controlling or having controlled technically the green character of said product by a ¹⁴C measurement of said product. Hence, the biogenic carbon content is measured in the final chemical product for certifying the green character of said chemical product.

A method for monitoring the amount of C14 present in co-feeds or blends of intermediate petroleum products and biogenic feedstocks, and corresponding blend streams in refinery copro-cessing operations is disclosed in WO 2022/172181 A1. Controlling the biogenic carbon content in at least one chemical product made from syngas which is obtained from a feedstock having an undefined biogenic carbon content is not disclosed in this document.

WO 2022/084436 A1 relates to a process for the manufacture of a useful product such as a higher molecular weight (typically liquid) hydrocarbon product, for example synthetic fuels, from synthesis gas having a desired hydrogen to carbon monoxide molar ratio comprising: gasifying a first carbonaceous feedstock comprising waste materials and/or biomass in a gasification zone to produce a first synthesis gas; optionally partially oxidizing the first synthesis gas in a partial oxidation zone to generate oxidized synthesis gas; reforming a second carbonaceous feedstock, preferably renewable natural gas, to produce a second synthesis gas, the second synthesis gas having a different hydrogen to carbon ratio from that of the first raw synthesis gas; combining at least a portion of the first synthesis gas and at least a portion of the second synthesis gas in an amount to achieve the desired hydrogen to carbon molar ratio and to generate a combined synthesis gas and subjecting at least part of the combined synthesis gas to a conversion process effective to produce the useful product. The reforming step enables the conventional water gas shift reaction to be dispensed with.

WO 2017/011025 A1 relates to processes for producing high biogenic concentration Fischer-Tropsch liquids derived from the organic fraction of municipal solid wastes (MSW) feedstock that contains a relatively high concentration of biogenic carbon (derived from plants) and a relatively low concentration of non-biogenic carbon (derived from fossil sources) wherein the biogenic content of the Fischer-Tropsch liquids is the same as the biogenic content of the feedstock.

Accordingly, there is a need for a system and a method for continuous production of syngas and/or chemical products having a target biogenic carbon content which is defined using a feedstock having an undefined biogenic carbon content.

### Summary of the Invention

These problems are solved by a system for producing syngas and/or at least one chemical product having a target biogenic carbon content of about 0 % to about 100 %, the system comprising:
- a syngas producing unit comprising a first feeding device, at least one gasifier, at least one syngas purification unit for providing a first syngas stream, a mixing device and an optional first syngas stream process unit;
   wherein the at least one gasifier is downstream of and fluidically connected to the first feeding device,
   wherein the at least one syngas purification unit is downstream of and fluidically connected to the at least one gasifier,
   wherein said mixing device is downstream of and fluidically connected to the at least one syngas purification unit and downstream of and fluidically connected to a second syngas stream, or wherein said mixing device is downstream of and fluidically connected to said optional first syngas stream process unit and downstream of and fluidically connected to said second syngas stream,
   wherein said mixing device is receiving said first syngas stream and a second syngas stream and wherein a combined syngas stream is leaving said mixing device, and
   wherein the optional first syngas stream process unit is downstream of and fluidically connected to the at least one syngas purification unit,
   wherein said first syngas stream has a first biogenic carbon content which is undefined,
   wherein said second syngas stream has a second biogenic carbon content which is defined,
   wherein said combined syngas stream has a combined biogenic carbon content,
   wherein said first feedstock is solid;
- optionally a first further process unit downstream of and fluidically connected to the mixing device, optionally a second further process unit downstream of and fluidically connected to the optional first further process unit and optionally a third further process unit downstream of and fluidically connected to the optional second further process unit, wherein a first chemical product leaves the optional first further process unit in downstream direction, a second chemical product leaves the optional second further process unit in downstream direction, and a third chemical product leaves the optional third further process unit in downstream direction;
- at least one measuring element for measuring the biogenic carbon content of the first syngas stream and/or the combined syngas stream;
- a control unit for adjusting the feed flow rate of the first feed stream or of the first feed stream and the first syngas stream and/or the second syngas stream according to a biogenic carbon content of about 0 % to about 100 % of the combined syngas stream.

These problems are further solved by a method for producing a combined syngas stream and/or at least one chemical product from said combined syngas stream having a target biogenic carbon content of about 0 % to about 100 %, the method comprising the steps:
(i) feeding a first feed stream of a first feedstock having a first biogenic carbon content through a first feeding device into a gasifier to obtain a first syngas stream with a flow rate and a first molar ratio H₂ : CO,
   wherein the biogenic carbon content of the first feedstock and the first syngas stream is undefined, wherein said first feedstock is solid;
(ii) providing a second syngas stream with a second flow rate and a second biogenic carbon content, wherein the second biogenic carbon content is defined;
(iii) optionally changing the molar ratio H₂ : CO of the first syngas stream to a second molar ratio H₂ : CO;
(iv) combining the first syngas stream or the first syngas stream with a second molar ratio H₂ : CO with the second syngas stream in a mixing device
   and thereby forming a combined syngas stream having a combined biogenic carbon content,
   optionally converting said the combined syngas stream into a first chemical product in a first further process unit,
   optionally converting said optional first chemical product in a second further process unit into a second chemical product,
   optionally converting said second chemical product in a third further process unit into a third chemical product;
(v) measuring the biogenic carbon content of the first syngas stream and/or the combined syngas stream;
(vi) calculating the deviation between said target biogenic carbon content and the at least one biogenic carbon content measured in step (v);
(vii) adjusting the flow rate of the first feed stream or the first feed stream and the flow rate of the first syngas stream and/or the flow rate of the second syngas stream;
(viii) repeating steps (i) to (vii) until said deviation calculated in step (vi) is equal or smaller than a tolerance limit of +/- 50 % for a target biogenic carbon content of up to about 75 %, +/-20 % for a target biogenic carbon content of about 75 % to about 90 %, and +/- 10 % for a target biogenic carbon content of about > 90 %.

The systems and the methods according to the present invention enable the continuous production of a combined syngas stream and optionally at least a first chemical product from said combined syngas stream having a desired and stable target biogenic carbon content from a first syngas stream of a first feedstock having a first biogenic carbon content and a second syngas stream of a second feedstock having a second biogenic carbon content wherein the first feedstock and the first syngas stream have an undefined biogenic carbon content and wherein the second syngas stream has a defined biogenic carbon content. Hence, the biogenic carbon content of the first feedstock and the first syngas stream varies as a function of time.

"Undefined" means that the biogenic carbon content in the first feedstock is not determined before the first feedstock is fed into the system according to the present invention, hence, the biogenic carbon content of the first feedstock is unknown before fed into the system according to the present invention. Preferably, the biogenic carbon content of the first feedstock is also fluctuating, i.e., is varying as a function of time. For example, the biogenic carbon content of the first feedstock may vary in a timeframe of hours of feeding time or in a timeframe of days of feeding time.

The second syngas stream obtained from a second feedstock has a defined biogenic carbon content. "Defined" means that the second syngas stream and the second feedstock have a homogeneous biogenic carbon content which optionally is/was determined before the second syngas stream is fed into the system according to the present invention. "Defined" further means that the biogenic carbon content of the second syngas stream and the second feedstock is not varying as a function of time like the biogenic carbon content in the first feedstock.

According to the present invention, the biogenic carbon content is measured in the syngas, to avoid the disadvantage of the inhomogeneous distribution of biogenic carbon in solid or mainly solid feedstocks.

Preferably, the biogenic carbon content is measured in a gaseous stream to avoid the disadvantage of the inhomogeneous spatial distribution of biogenic carbon in solid or mainly solid feedstocks and/or solid or mainly solid chemical products.

Preferably, the combined syngas stream and the optional first, second and third chemical product(s) having a target biogenic carbon content is/are directly manufactured with the system and by the method according to the present invention and no blending with another batch of syngas and/or the respective chemical product having a biogenic carbon content is required to obtain the combined syngas stream and the optional first, second and third the chemical product(s) having the target biogenic carbon content.

Furthermore, the systems and the methods according to the present invention enable the production of first syngas stream by gasification, forming a combined syngas stream from the first syngas stream and a second syngas stream, and optionally at least a first chemical product manufactured from said combined syngas stream in at least a first further process unit, the at least first chemical product having the desired target biogenic carbon content, from a first syngas stream by gasification of a first feedstock having a first biogenic carbon content and a second syngas stream having a second biobased content wherein the first feedstock and the first syngas stream have an undefined biogenic carbon content and the second syngas stream has a defined biogenic carbon content.

### Description of the Figures

Figure 1a shows a system according to a first aspect of a first embodiment of the present invention.
Figure 1b shows a system according to a second aspect of a first embodiment of the present invention.
Figure 2a shows a system according to a first aspect of a second embodiment of the present invention.
Figure 2b shows a system according to a second aspect of a second embodiment of the present invention.
Figure 3a shows a system according to a first aspect of a third embodiment of the present invention.
Figure 3b shows a system according to a second aspect of a third embodiment of the present invention.

### Detailed Description of the Invention

The present invention is further described below with reference to the embodiments and figures, but the present invention is not limited to these embodiments, and any modifications or substitutions within the basic spirit of the present invention are still within the scope of the present invention as claimed.

### Definitions:

In the context of the present description and the accompanying claims, the term "about" preferably means a deviation of the thus described value of ±15%.

In the context of the present invention, the term "combinations thereof" is inclusive of one or more of the recited elements.

In the context of the present invention, the term "mixture thereof" is inclusive of one or more of the recited elements.

The term "biogenic" is defined herein as containing organic carbon of renewable origin like agricultural, plant, animal, fungi, microorganisms, marine, or forestry materials living in a natural environment in equilibrium with the atmosphere.

The term "biogenic carbon" is defined herein as ¹⁴C from a "biobased" source.

The term "biogenic carbon content" is defined herein based on the definition provided in ASTM 6866-22, chapters 3.3.8 and 21.1 as the fraction of biogenic carbon in a combined stream and/or (first) product stream as a percentage of the total carbon (TC) in said product and is calculated according to formula (1): $% biogenic carbon content \left(mass basis\right) = \left[% TC/100\times \left(% biogenic carbon content\right)/100\right] \times 100$ (1)

A "biogenic carbon content on a mass basis" is defined herein as the amount of biogenic carbon in a combined stream and/or (first) product stream as a percent of the total mass of a combined stream and/or (first) product stream can be calculated from the above defined "biogenic carbon content" according to Eq. 4, chapter 21 in ASTM 6866-22.

"¹⁴C" refers to an isotope of carbon comprising 6 protons and 8 neutrons.

"¹²C" and "¹³C" refer to stable isotopes of carbon comprising 6 protons and 6 neutrons (¹²C) and 6 protons and 7 neutrons (¹³C).

The term "feed flow rate" includes "mass flow rate" for solid feedstocks and "volume flow rate" for liquid and/or gaseous feedstocks, intermediate chemical products, and chemical products.

The term "undefined biogenic carbon content" in respect to a stream such as a feed stream, an intermediate chemical product stream such as a syngas stream obtained by gasification of at least one feedstock and/or a chemical product stream such as a syngas stream having a modified molar ratio H₂ : CO in respect to the syngas obtained from the gasification reaction or for example a stream of methanol is defined herein as a change of the biogenic carbon content over time in such a feed stream. The reason for such a "defined biogenic carbon content" is that the first feed stream of the first feedstock having a first biogenic carbon content has an undefined biogenic carbon content. Hence, the first feedstock has an inhomogeneous biogenic carbon content.

The "fossil carbon" is defined herein as carbon that contains essentially no ¹⁴C because its age is very much greater than the 5730 years half-life of ¹⁴C.

"Syngas" also known as "synthesis gas" refers to a mixture of predominantly CO and H₂, which in addition may comprise further ingredients such as water, CO₂, and methane, which can be obtained by gasification of one or more feedstocks in a syngas producing unit comprising at least one gasifier. Syngas can have a biogenic carbon content because it comprises CO in which the carbon atom can be a biogenic carbon atom.

The term "electronically connected to" refers to a connection between two or more units and/or elements and/or devices which allows the flow of an electrical current between said two or more units and/or elements and/or devices. Accordingly, also information such as a measured biogenic carbon content value can be transferred between two units, devices, elements, controllers, etc. which are "electronically connected to [each other]".

The term "fluidically connected to" in respect to two or more units and/or elements and/or devices and/or controllers is defined herein that a fluid can flow from one of such unit to the other such unit and flow through and/or along such an element, device, or controller etc.

The direction of flow of a fluid between two or more units and/or devices is defined by the terms "upstream of" and "downstream of". For example, in case a unit 2 is "downstream of" a unit 1, the fluid flows from unit 1 to unit 2. In case a unit 1 is "upstream of" a unit 2, the fluid also flows from unit 1 to unit 2.

The term "physically connected to" refers to a direct ("physical") connection of two or more units and/or elements and/or devices.

The terms "first feedstock"/"first feed stream" and "second feedstock"/"second feed stream" are used synonymously, respectively. A "first feedstock" is inserted into a device/unit in form of a "first feed stream" and a "second feedstock" is inserted into a device /unit in form of a "second feed stream".

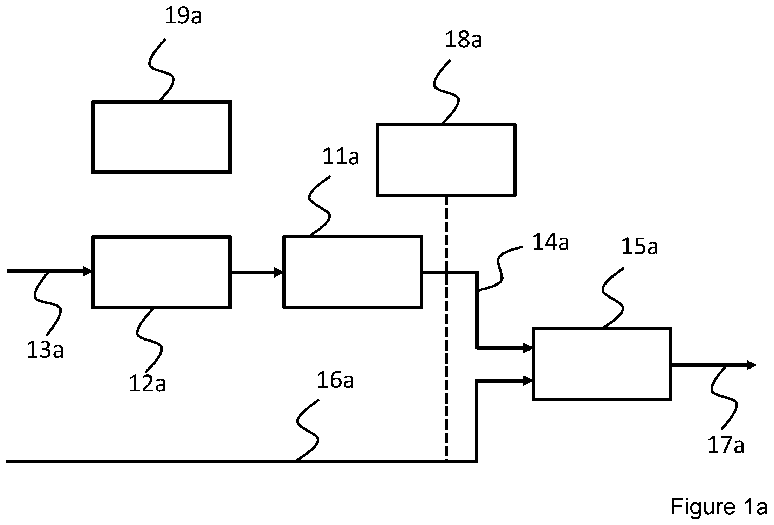

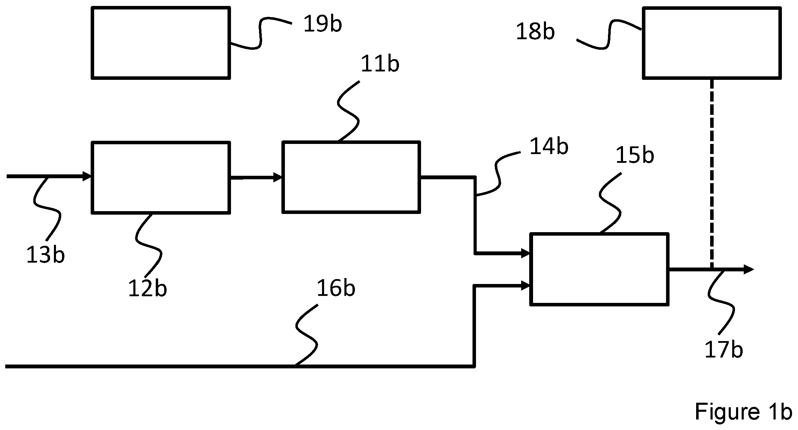

The system according to a first embodiment of the present invention is shown in Figure 1a and Figure 1b.

A syngas producing unit comprising at least one gasifier (11a;11b) receives a first feed stream of a first feedstock (13a;13b) having a first biogenic carbon content from a first feeding device (12a;12b). The at least one gasifier is downstream of and fluidically connected to the first feeding device (12a;12b). The first feedstock is converted into a first syngas stream (14a;14b) by a gasification reaction. The first syngas stream (14a;14b) is leaving the at least one gasifier (11a;11b) in downstream direction and optionally, impurities are removed in at least one optional syngas purification unit (not shown in Figures 1a and 1b) which is downstream of and fluidically connected to the at least one gasifier (11a;11b). The syngas stream (14a;14b) is then inserted into a mixing device (15a;15b) which is downstream of and fluidically connected to the optional at least one syngas purification unit, which is downstream of and fluidically connected to the at least one gasifier (11a;11b) or downstream of and fluidically connected to the at least one gasifier (11a;11b).

The mixing device (15a;15b) also receives a second syngas stream (16a;16b) from a second feedstock having a second biogenic carbon content. The first syngas stream (14a;14b) and the second syngas stream (16a;16b) are mixed in the mixing device (15a;15b) and leave said mixing device (15a;15b) in downstream direction as a combined syngas stream (17a;17b).

Optionally, impurities are removed from the mixed syngas stream (17a;17b), preferably in case impurities were not removed from the first syngas stream (14a;14b) and the second syngas stream (16a;16b) before. In this case, at least one syngas purification unit is downstream of and fluidically connected to the mixing device (15a;15b).

In a first aspect of the first embodiment, the system further comprises at least one measuring element (18a) for measuring the biogenic carbon content of the first syngas stream (14a) . This first aspect of the first embodiment is shown in Figure 1a.

In a second aspect of the first embodiment, the system further comprises at least one measuring element (18b) for measuring the biogenic carbon content of the combined syngas stream (17b) and/or. This second aspect of the first embodiment is shown in Figure 1b. Both aspects can also be combined in a single first embodiment.

The at least one measuring element (18a;18b) is fluidically connected to said first syngas stream (14a) in the first aspect of the first embodiment, and/or fluidically connected to said combined syngas stream (17b).

The system further comprises a control unit (19a;19b) for adjusting the feed flow rate of the first feed stream (13a;13b) of the first feedstock and/or the flow rate of the second syngas stream (16a;16b) of the second feedstock according to a target biogenic carbon content of about 0 % to about 100 % in the combined syngas stream (17a;17b) and/or the optional first chemical product and/or the optional second chemical product and/or the optional third chemical product.

"According to" is to be understood for all system and method embodiments of the present invention in the sense of "adjusting the flow rate of the first feed stream (13a;13b) of the first feedstock and/or the flow rate of the second syngas stream (16a;16b) until a target biogenic carbon content of the combined syngas stream (17a;17b) and/or the optional first chemical product and/or the optional second chemical product and/or the optional third chemical product of about 0 % to about 100 % is obtained by said adjustment of the flow rate of the first feed stock (13a;13b) and/or the flow rate of the second syngas stream (16a;16b). This adjustment is repeated in the method according to the present invention ("repeating steps (i) to (v)") until the deviation between the measured biogenic carbon content and the target biogenic carbon content of the combined syngas stream (17a;17b) and/or the optional first chemical product and/or the optional second chemical product and/or the optional third chemical product of about 0 % to about 100 % is equal or smaller than a tolerance limit of +/- 50 % for a target biogenic carbon content of up to about 75 %, +/- 20 % for a target biogenic carbon content of about 75 % to about 90 %, and +/- 10 % for a target biogenic carbon content of about > 90 %.

The first feed stream is fed into the at least one gasifier (11a;11b) and is converted into raw syngas by a gasification reaction. Said raw syngas is then treated optionally in at least one syngas purification unit which is part of the syngas producing unit and leaves the syngas producing unit as a clean first syngas stream (14a;14b). The at least one optional syngas purification unit (not shown in Figures 1a and 1b) is downstream of and fluidically connected to the at least one gasifier (11a;11b). Syngas producing units comprising one or more feeding devices, at least one gasifier and at least one syngas purification unit are also known as "gasification islands".

Suitable gasifiers (11a;11b) comprise counter-current fixed bed reactors, co-current-fixed bed reactors, bubbling fluidized bed reactors, circulation fluidized bed reactors, and downdraft or updraft entrained flow reactors. The selection of size and reactor type depends on several parameters, including the composition of the carbonaceous feedstock, demand of products, moisture content and availability of the carbonaceous feedstock. Preferably, the gasifier (11a;11b) is an "oxygen blown" gasifier, i.e., oxygen is preferably used as the oxidant in suitable gasifiers (11a;11b) listed above.

The gasification reaction in a gasifier is typically carried out at a temperature > 700 °C in the presence of a sub-stoichiometric amount of an oxidant such as oxygen, air, steam, supercritical water, CO₂, or a mixture of the aforementioned. Oxygen is the most common oxidant used for gasification because of its easy availability and low cost. If steam acts as oxidant, the syngas has a higher first molar ratio H₂ : CO than in case if air is used as oxidant. For example, a typical molar ratio "air : combined feedstock" ranges from 0.3 to < 1.

The conversion of the first feed stream in the gasifier produces a first syngas stream (14a;14b) which consists primarily of H₂ and CO with minor amounts of CO₂, methane, other hydrocarbons, and impurities. Said first syngas stream (14a;14b) has a first molar ratio H₂ : CO when leaving the gasifier (11a;11b) which ranges from about 0.1 : 1 to about 3 : 1 and depends on the type of solid and/or liquid feedstocks used, the oxidant and other reaction conditions applied such as temperature and/or residence time of the reactants in the gasifier.

In case the system according to the present invention contains two or more gasifiers in which the first feed stream is converted into the first syngas stream, the at least two gasifiers are selected from the group comprising counter-current fixed bed reactors, co-current-fixed bed reactors, bubbling fluidized bed reactors, circulation fluidized bed reactors, downdraft entrained flow reactors, and updraft entrained flow reactors and are preferably installed in a serial manner, i.e., gasifier 2 is downstream of and fluidically connected to gasifier 1 wherein gasifier 1 is the first gasifier. The advantage of at least two gasifiers installed in this fashion is a more complete conversion of the feedstocks and intermediate products of the gasification reaction into the desired syngas components H₂ and CO. More preferably, the first gasifier (gasifier 1) and the second gasifier (gasifier 2) are preferably different types of gasifiers. Most preferably, the first gasifier (gasifier 1) is selected from the group consisting of counter-current fixed bed reactors, co-current-fixed bed reactors, bubbling fluidized bed reactors, circulation fluidized bed reactors and the second gasifier (gasifier 2) is a downdraft entrained flow reactor or an updraft entrained flow reactor which enable the most beneficial of the above-described advantages.

In case three gasifiers are connected to each other in this fashion, all three gasifiers are preferably different types of gasifiers. The advantage such an installation, especially when different types of gasifiers are employed, is an even higher yield of the desired syngas components H₂ and CO. Furthermore, in this preferred and more preferred installation, the solid side products such as sludge are preferably free of carbon and can therefore be disposed in e.g., landfills without further treatment.

Impurities in the raw syngas obtained by a gasification reaction are preferably removed from the first syngas stream (14a;14b) directly after leaving the at least one gasifier (11a;11b) in at least one syngas purification unit. Optionally, the first syngas stream (14a;14b) is first fed into the mixing device (15a;15b), mixed with the second syngas stream (16a;16b) to form a combined syngas stream (17a;17b) and then impurities are removed from the combined syngas stream (17a;17b) in at least one syngas purification unit.

The use of a clean first syngas stream (14a;14b) obtained from the at least one optional syngas purification unit connected to the at least one gasifier 11a;11b) or the use of a clean combined syngas stream (17a;17b) obtained from the at least one optional syngas purification unit connected to the mixing device (15a;15b) is preferred because catalysts utilized in successive process steps have an improved lifetime and maintain their activity when using a clean first syngas stream (14a;14b) or a clean combined syngas stream (17a;17b) instead of the raw syngas obtained directly from the gasification reaction in the at least one gasifier (11a;11b).

Typical impurities in the raw syngas obtained from the gasification reaction in at least one gasifier (11a;11b) comprise chlorides, sulfur-containing organic compounds such as sulfur dioxide, trace heavy metals (e.g., as respective salts) and particulate residues. Various chemical and/or physical methods for removal of such impurities from said raw syngas such as filtration, scrubbing, hydrotreatment and ab-/adsorption are known and can be chosen and adapted according to the type and respective concentration of the impurities in said raw syngas and the tolerance to such impurities in the successive process steps. Some selected methods for removal of impurities from said raw syngas will be discussed in more detail. One or more of said methods can also be implemented into the at least one syngas purification unit of the syngas producing unit comprising at least one gasifier (11a;11b). However, this selection of methods is not limiting the scope of the present invention.

Bulk particulate impurities can be removed from the raw syngas by a cyclone and/or filters, fine particles, and chlorides by wet scrubbing, trace heavy metals, catalytic hydrolysis for converting sulfur-containing organic compounds to H₂S and acid gas removal for extracting sulfur-containing gases such as H₂S. Bulky and fine particles in the first syngas stream (14a;14b) may also be removed with a quench in a soot water washing unit.

A gasification reaction usually results in further reaction products such as solid and/or highly viscous carbonaceous residues (e.g., char and/or tar) which can be further treated in separate steps not relevant for the systems and methods according to the present invention.

Feeding devices suitable for the system according to the present invention are for example stationary, fillable, and emptying lock containers or rotary feeding devices comprising blades. Such feeding devices are particularly suitable to feed a solid first feed stream into the system. Solid feed streams may be subjected to one or more pre-treatment methods such as size reduction, drying, torrefaction, compaction, and addition of gasifying agents. Such pre-treatment methods may be part of the first feeding device (12a;12b).

Feeding devices suitable to feed a liquid first feed stream (13a;13b) comprise compressors, pumps and the like, optionally further comprising tanks and the tubing required between tanks, compressors and/or pumps and the at least one falsifier. Such devices and their application are known in the art.

Feeding devices suitable to feed a gaseous first feed stream (13a;13b) comprise compressors, pumps and the like, optionally further comprising tanks and the tubing required between tanks, compressors and/or pumps and the at least one falsifier. Such devices and their application are known in the art.

Optionally, the first feedstock is pre-treated before entering the first feeding device (12a;12b). A suitable pre-treatment method or combination of pre-treatment methods in a pre-treatment unit should provide a sufficiently homogeneous carbon-based feedstock to the gasification reaction and likewise enable the continuous production of syngas by gasification of a feedstock.

A pre-treatment method or a combination of more than one pre-treatment methods in a pre-treatment unit preferably results in a homogenization of the physical and/or chemical properties of the first feedstock and/or the second feedstock and/or the requirement(s) for a specific type of gasifier and/or the requirements for the optional at least one further chemical production unit for producing a chemical compound or mixture of chemical compounds.

The pre-treatment method for the first feedstock and/or the second feedstock is preferably selected from the group comprising drying, comminution, classification, sorting, agglomeration, thermochemical methods, and biological methods.

Suitable drying methods comprise belt drying, fluidized bed drying, drum drying, spray drying, hearth drying, rotary tray drying, and radiation drying.

Suitable comminution methods comprise pressure, impact, shearing, grinding, milling, crushing, and cutting. Pre-treatment units suitable for size reduction by grinding a feedstock comprise rod mills and ball mills, closed circuited with a classifier unit. Milling is preferably performed wet. Accordingly, a grinding pre-treatment is preferably combined with a drying method in a single pre-treatment unit. Pre-treatment units suitable for size reduction by crushing a feedstock comprise jaw-crushers, gyratory crushers, and cone crushers. Crushing is preferably performed dry. Accordingly, a crushing pre-treatment is preferably combined with a drying method prior to crushing in a single pre-treatment unit.

Suitable classification methods comprise screening (e.g., revolving drum screens, surface screens, fixed and movable gratings), winnowing, flotation, and air table classification. Screening systems preferably comprise one or more of bar screens, wedge wire screens, radial sieves, banana screens, multi-deck screens, vibratory screens, fine screens, flip flop screens and wire mesh screens. Screens can be static, or they can incorporate mechanisms to shake or vibrate the screen(s).

Suitable sorting methods comprise manual sorting, pneumatic sorting, sensor-based sorting (e.g., NIR-assisted sorting, inductive-assisted sorting, and X-ray-assisted sorting), and metal separation (e.g., magnetic separation, eddy current separation).

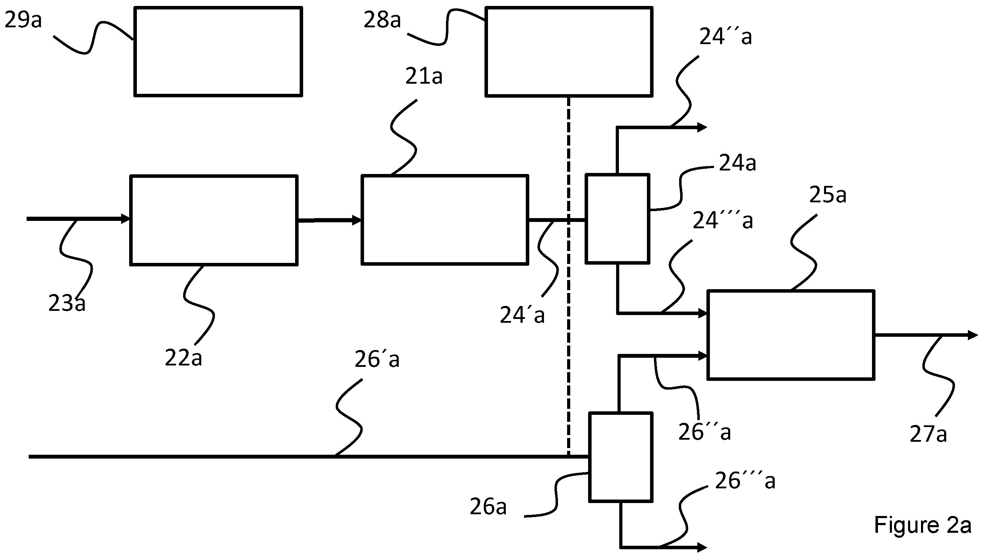

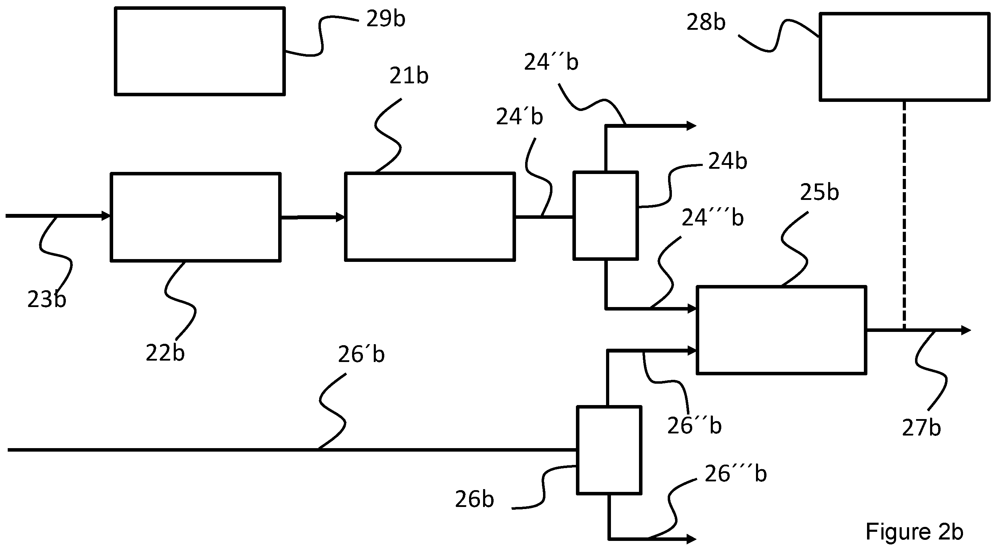

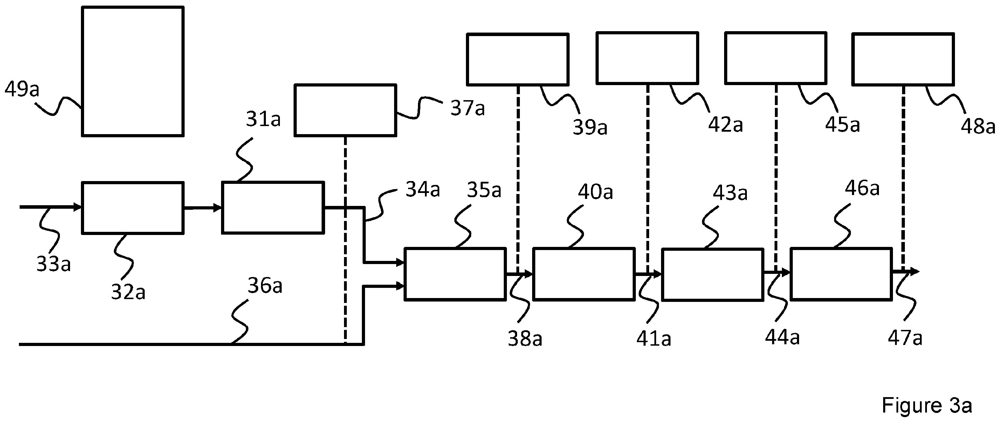

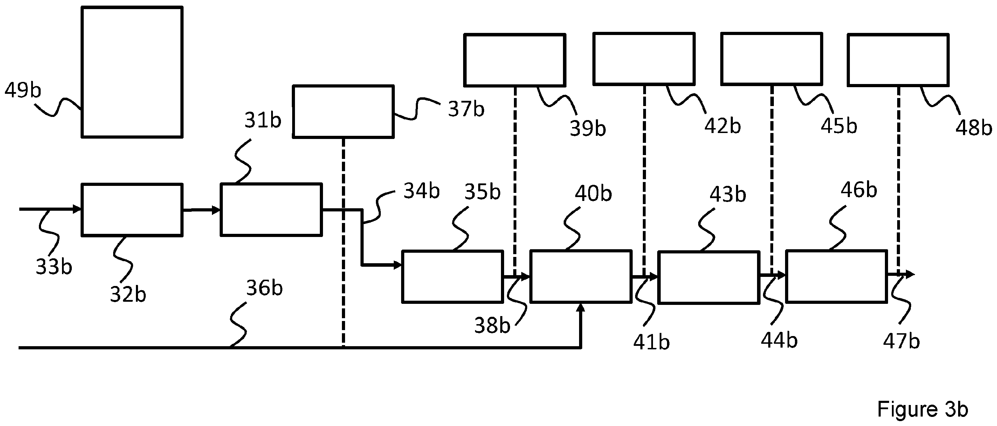

Suitable agglomeration methods comprise pelletizing, briquetting, and extrusion. Such methods usually comprise a means for compressing the feedstock and optionally a further means for heating ("baking") the compressed feedstock. Such pre-treatment methods often provide better physical characteristics than the initial feedstock, improve the transportability of the feedstock to e.g., another location such as from a facility a to a facility b (Figures 2 and 3), and improve the thermochemical behavior.

Suitable thermochemical methods comprise pyrolysis, converting the feedstock into char, and torrefaction. Pre-treatment units suitable for a thermochemical pre-treatment of feedstocks comprise pyrolysis reactors in which the feedstock is heated to e.g., 500 °C in an inert atmosphere to obtain a pyrolysis oil having an improved calorific value compared to the untreated feedstocks.

Suitable biological methods comprise fermentation such as anaerobic fermentation.

The first feeding device (12a;12b) and/or the first syngas stream (14a;14b) and/or the second syngas stream (16a;16b) preferably comprise(s) at least one means for controlling the flow of the first feed stream (13a;13b) and/or the first syngas stream (14a;14b) and/or the flow of the second syngas stream (16a;16b) which is fluidically connected to the first feed stream (13a;13b) in the first feeding device (12a;12b) and/or the first syngas stream (14a;14b) and/or fluidically connected to the second syngas stream (16a;16b).

Preferably, the at least one means for controlling the flow of the first feed stream (13a;13b) is a flow meter fluidically connected to the first feed stream (13a;13b). More preferably, the at least one means for controlling the flow of the first feed stream (13a;13b) is a mass flow controller and/or a volume flow controller in case the first feed stream (13a;13b) is predominantly a gas or mixture of gases.

The at least one means for controlling the flow of the first feed stream (13a;13b) is a solid stream flow meter in case the first feed stream (13a;13b) is predominantly solid or mixture of solids.

Suitable flow controllers for controlling the flow in case the first feed stream (13a;13b) is predominantly solid, or mixture of solids comprise load cells preferably combined with buffer zones, and use of characteristic curves which are provided for feedstocks having certain fluidic properties (e.g., particle size distribution).

Preferably, the at least one means for controlling the flow of the first syngas stream (14a;14b) is a flow meter fluidically connected to the first syngas stream (14a; 14b). More preferably, the at least one means for controlling the flow of the first syngas stream (14a;14b) is a mass flow controller for gases.

Preferably, the at least one means for controlling the flow of the second syngas stream (16a;16b) is a flow meter fluidically connected to the second syngas stream (16a;16b). More preferably, the at least one means for controlling the flow of the second syngas stream (16a;16b) is a mass flow controller for gases.

Suitable flow controllers for controlling the flow of gases comprise mass flow controller and/or volume flow controllers. Such a flow controller is a device suitable for measuring and controlling the flow of (liquids and) gases. The flow controller can be analog or digital, preferably the at least one flow controller is a digital flow controller. The flow controllers preferably have an inlet port, an outlet port, a mass flow sensor and/or a volume flow controller, and a proportional control valve. A signal from the control unit or by an operator or by any other suitable means is received through the input port of the flow controller and said signal is compared to the value from the mass flow sensor and/or the volume flow controller and the proportional valve is adjusted accordingly to achieve the desired flow rate of the first feed (13) stream and/or the second feed stream (15). The mass flow controller and/or volume flow controller can be for example a tube with a flap. The position of the flap in respect to the tube diameter relates to a specific flow rate through said tube. The flap can be connected to a mass flow sensor and/or volume flow sensor.

Different measurement methods are available for solid stream flow controllers such as impact plate, measuring of deflection chute and Coriolis technologies. Each method is particularly suitable for certain types of solid streams, e.g., impact plate flow controllers are suitable for granular and/or powdered solid streams. The skilled person knows which type of solid stream flow controller is suitable for which type of solid streams and selects a suitable solid stream flow controller for a given solid stream material. Accordingly, in a preferred embodiment of the present invention, the first feeding device (12) and/or the second feeding device (14) may comprise more than one type of solid stream flow controller to provide a precise flow control for e.g., different kinds of solid hydrocarbon feedstocks. The solid stream flow may also be determined by empirical calibration methods such as level calibration ("Auslitern" in German language).

Accordingly, in a preferred embodiment of the present invention, the first feeding device (12a;12b) may comprises more than one type of solid stream flow controller to provide a precise flow control for e.g., different kinds of solid hydrocarbon feedstocks.

Preferably, the at least one solid stream flow controllers such as solid hydrocarbon feedstocks (with and without biogenic carbon) measures and weights said solid hydrocarbon feedstocks (first feed stream) as they flow through the first feeding device (12a;12b), preferably combined with buffer zones.

The at least one measuring element (18a;18b) optionally comprises all components required for measuring the biogenic carbon content(s) of the first syngas stream (14a;14b) and/or the combined syngas stream (17a;17b). Such components include a means for gathering a sample from the respective stream, a means for measuring the amount of sample taken, a means for transferring the sample to a means for measuring the biogenic carbon content of the respective stream and a means to safely dispose said sample.

Optionally, the at least one measuring element (18a;18b) is electronically connected to the control unit (19a;19b). Said biogenic carbon content(s) measured by the at least one measuring element (18a;18b) can be automatically forwarded to the control unit (19a;19b) in case the at least one measuring element (18a;18b) is electronically connected to the control unit (19a;19b) or the biogenic carbon content(s) measured are manually forwarded to the control unit (19a;19b) by e.g., an operator.

The biogenic carbon content according to the present invention is preferably determined using a ¹⁴C ("radio-carbon") analysis.

The biogenic carbon content can be for example measured according to ASTM 6866-22 in which two analysis methods for determining the biogenic carbon content in a gaseous stream are disclosed:
i) accelerator mass spectrometry (AMS) along with isotope ratio mass spectrometry (IRMS) (denoted "Method B" in ASTM D6866-22) or
ii) liquid scintillation counters (LSC) using sample carbon that has been converted to benzene (denoted "Method C" in ASTM D6866-22)
wherein the maximum total error for both methods is +/- 3 %.

In both methods disclosed in ASTM 6866-22, the ¹⁴C/¹²C or ¹⁴C/¹³C isotope ratio is determined relative to a carbon-based modern reference material such as NIST Standard Reference Material (SRM) 4990C. The biogenic carbon content can be directly calculated from the measured values obtained by Method B (chapter 9.5) and C (chapter 13.4). Method B is described in detail in chapters 6 to 9 and Method C is described in detail in chapters 10 to 13 of ASTM D6866-22.

The biogenic carbon content can also be determined according to DIN EN 16785-1 by following the guidelines for "Group 1 products" disclosed in this norm and according to CEN/TS 16640. The uncertainty for the measurement method disclosed in DIN EN 16785-1 is +/- 3 % of the measured value for the biobased-carbon content. The biogenic carbon content is then calculated with formula C.1 in Annex C of DIN EN 16785-1 for the total mass of the sample.

The biogenic carbon content can also be determined using the method and device disclosed in CN 10805163 A: a sample is extracted from the first syngas stream and/or the second syngas stream and/or the combined syngas stream and/or optional first chemical product stream and so on and subjected to a ¹⁴C measurement using a ¹⁴C isotope online detector to obtain the ¹⁴C content. Next, the total carbon content (TC) is measured, and the biogenic carbon content is then calculated from the ¹⁴C content and the TC content according to formula (1).

The biogenic carbon content can also be determined using the method and device disclosed in KR 10-2022-0058093 A.

The biogenic carbon content can also be determined using a tripe to double coincidence ratio (TDCR) scintillation counter, optionally automated, as disclosed in WO 2022/172181 A1.

Modifications and adaptions of the methods and devices described above which may be required for use in the system and method according to the present invention and can be made by a skilled person.

Preferably, the system comprises one measuring element which is fluidically connected to the first syngas stream (14a;14b) made from the first feedstock stream (13b) by a gasification reaction in at least one gasifier (11a;11b) and/or the combined syngas stream (17a;17b) leaving the mixing device (15a;15b) in downstream direction.

More preferably, the system comprises one measuring element which is fluidically connected to the first syngas stream (14a;14b) made from the first feedstock stream (13b) by a gasification reaction in at least one gasifier (11a;11b).

The system according to the present invention comprises a control unit (19a;19b) which is preferably electronically and/or physically connected to the first feeding device (12a;12b) and/or a means for controlling the flow of the first syngas stream (14a;14b) and/or a means for controlling the flow of the second syngas stream (16a;16b). More preferably, the control unit (19a;19b) is electronically and/or physically connected to a flow controller which is fluidically connected to the first feed stream (13a;13b) in the first feeding device (12a;12b) and/or a flow controller which is fluidically connected to the second syngas stream (16a;16b).

Said control unit (19a;19b) is preferably electronically and/or physically connected to the one or more measuring element (18a;18b).

The control unit (19a;19b) receives the measured biogenic carbon content from the one or more measuring element(s) (18a;18b) and compares said measured biogenic carbon content(s) with the target biogenic carbon content of the combined syngas stream and/or the optional first chemical product and/or the optional second chemical product and/or the optional third chemical product of about 0 % to about 100 %. The control unit (19a;19b) then determines the deviation between said measured biogenic carbon content(s) and said target biogenic carbon content of about 0 % to about 100 %. The deviation between said measured biogenic carbon content(s) and said target biogenic carbon content of about 0 % to about 100 % is then transferred (e.g., manually by an operator or automatically in case the control unit (19a;19b) is electronically and/or physically connected to the at least one measuring element (18a;18b)) to the first feeding device (12a;12b) and/or the first syngas stream (14a;14b) and/or the second syngas stream (16a;16b) and/or the combined syngas stream (17a;17b), or optionally to a flow controller fluidically connected to the first feed stream (13a;13b) in the first feeding device (12a;12b) and/or a flow controller fluidically connected to the first syngas stream (14a;14b) and/or a flow controller fluidically connected to the second syngas stream (16a;16b), and thereby the flow rate of the first feed stream (13a;13b) and/or the flow rate of the first syngas stream (14a;14b) and/or the flow rate of the second syngas stream (16a;16b) are/is adjusted according to said target biogenic carbon content of about 0 % to about 100 %. Said flow rate(s) is/are preferably adjusted with a flow controller which is fluidically connected to the first feed stream (13a;13b) in the first feeding device (12a;12b) and/or a flow controller which is fluidically connected to the second syngas stream (16a;16b).

More preferably, the flow rate of the feed stream among the first feed stream (13a;13b) and the second syngas stream (16a;16b) which contributes a higher biogenic carbon content to the combined syngas stream (17a;17b) per time is adjusted by a flow controller. Most preferably, the flow rate of the feed stream among the first feed stream (13a;13b) and the second syngas stream (16a;16b) which contributes a higher biogenic carbon content to the combined syngas stream (17a;17b) per time is adjusted by a flow controller which is fluidically connected to said stream having a higher biogenic carbon content.

A rough estimate of the biogenic carbon content of a feedstock used as first feed stream (13a;13b) can be made by visually inspecting the feedstock prior to feeding the respective feedstock into the gasifier. For example, the average biogenic carbon content of household waste is roughly about 50 % was determined by analyzing the biogenic carbon content of CO₂ formed during incineration of household waste. The biogenic carbon content of the second syngas stream (16a;16b) is per se known in case (for example) methane from a fossil source (biogenic carbon content = 0 %) or methane obtained from a fermentation process of biomass (biogenic carbon content = 100 %) as well as defined mixtures of the two aforementioned types of methane are used as feedstocks for the second syngas stream (16a;16b).

Hence, the flow rate of the second syngas stream (16a;16b) having a known and constant biogenic carbon content is used in this preferred embodiment of the present invention to control the combined biogenic carbon content of the combined syngas stream (17a;17b) and/or optional first chemical product and/or optional second chemical product and/or optional third chemical product. When controlling said combined biogenic carbon content by the flow rate of the second syngas stream (16a;16b) having a known and stable biogenic carbon content, the fluctuating biogenic carbon content of the first feed stream (13a;13b) of the first feedstock and the first syngas stream (14a;14b) can be balanced. The control capability is limited by the available flow rate of the second syngas stream (16a;16b) and the desired flow rate of the combined syngas stream (17a;17b).

Preferably, the first feeding device (12a;12b) and/or the means for flow control connected to the first syngas stream (14a;14b) and/or the means for flow control connected to the second syngas stream (16a;16b) and/or the means for flow control connected to the combined syngas stream (17a;17b) are/is electronically and/or physically connected to the control unit (19a;19b).

Preferably, the at least on measuring element (18a;18b) is electronically connected to the control unit (19a;19b).

Preferably, the measured data are automatically transferred from the at least one measuring element (18a;18b) to the control unit (19a;19b) (which are electronically and/or physically connected to each other) and the calculated deviation is automatically transferred from the control unit (19a;19b) to the first feeding device (12a;12b) and/or the means for flow control connected to the first syngas stream (14a;14b) and/or the means for flow control connected to the second syngas stream (16a;16b) and/or the means for flow control connected to the combined syngas stream (17a;17b) (electronically and/or physically connected to each other).

More preferably, the measured data are automatically transferred from the at least one measuring element (18a;18b) to the control unit (19) (which are electronically and/or physically connected to each other) and the calculated deviation is automatically transferred from the control unit (19) to a flow controller fluidically connected to the first feed stream (13a;13b) in the first feeding device (12a;12b) and/or a flow controller fluidically connected to the second syngas stream (14a;14b) and/or a flow controller fluidically connected to the second syngas stream (16a;16b) (the at least one flow meter electronically and/or physically connected to the control unit (19a;19b)).

Most preferably, the measured data are automatically transferred from the at least one measuring element (18a;18b) to the control unit (19a;19b) (electronically and/or physically connected to each other) and the calculated deviation is automatically transferred from the control unit (19a;19b) to a flow controller fluidically connected to the second syngas stream (16a;16b) (the flow meter electronically and/or physically connected to the control unit (19a;19b)).

Optionally, the at least one measurement element (18a;18b) and the control unit (19) are part of a control system. One, two, three, four or more measuring elements can be part of the control system. The control system preferably combines all functionalities and tasks described above for the at least one measuring element (18a;18b) and the control unit (19). The control system preferably further comprises at least one control loop and at least one feedback controller such as a programmable logic controller.

The control system compares the measured biogenic carbon content of the first syngas stream (14a;14b) and/or the combined syngas stream (17a;17b) with the target biogenic carbon content of about 0 % to about 100 % (= the setpoint of the control system), and applies the deviation as a control signal to the first feeding device (12a;12b) and/or the means for flow control connected to the first syngas stream (14a;14b) and/or the means for flow control connected to the second syngas stream (16a;16b), preferably to the a flow controller which is fluidically connected to the first feed stream (13a;13b) in the first feeding device (12a;12b) and/or to a flow controller which is fluidically connected to the first syngas stream (14a;14b) and/or to a flow controller which is fluidically connected to the second syngas stream (16a;16b) to change the flow rate of the first feed stream (13a;13b) and/or the flow rate of the first syngas stream (14a;14b) and/or the flow rate of the second syngas stream (16a;16b) and thereby bring the measured biogenic carbon content (= process variable output of the plant) to the target biogenic carbon content of about 0 % to about 100 % (= setpoint of the control system).

Preferably, the flow rate of the first feed stream (13a;13b) is adjusted by a flow controller which is fluidically connected to the first feed stream (13a;13b) in the first feeding device (12a;12b) and/or the flow rate of the first syngas stream (14a;14b) is adjusted by a flow controller which is fluidically connected to the first syngas stream (14a;14b) and/or the flow rate of the second syngas stream (16a;16b) is adjusted by a flow controller which is fluidically connected to the second syngas stream (16a;16b). More preferably, the flow rate of the second syngas stream (16a;16b) is adjusted by a flow controller which is fluidically connected to the second syngas stream (16a;16b).

Preferably, the flow rate of the stream among the first feed stream (13a;13b) and the second syngas stream (16a;16b) which contributes a higher biogenic carbon content to the combined syngas stream (17a;17b) per time is adjusted by a flow controller. More preferably, the flow rate of the feed stream among the first feed stream (13a;13b) and the second syngas stream (16a;16b) which contributes a higher biogenic carbon content to the combined syngas stream (17a;17b) per time is adjusted by a flow controller which is fluidically connected to said stream having a higher biogenic carbon content.

Preferably, said deviation is applied as a control signal to the flow controller fluidically connected to the respective feeding device of the stream among the first feed stream (13a:13b) and the second syngas stream (16a;16b) which contributes a higher biogenic carbon content to the combined syngas stream (17a;17b) per time than the other feed stream wherein the biogenic carbon content of the second syngas stream (16a;16b) is defined and is, preferably, determined before the second syngas stream (16a;16b) is fed into the mixing device (15a;15b).

"Determined" in this respect comprises measuring the biogenic carbon content, obtaining the biogenic carbon content of a second syngas stream by the manufacturing plant of said second syngas stream, and knowing the origin of the second syngas stream (e.g., a second syngas stream manufactured from a fossil feedstock has a biogenic carbon content of 0 %, a second syngas stream manufactured from a renewable source may have a biogenic carbon content of 100 %, defined blends of such second syngas streams have a biogenic carbon content which can be calculated from the volume and/or mass ratio of the individual syngas streams combined to a second syngas stream).

Next, the biogenic carbon content in the first syngas stream (14a;14b) and/or the combined syngas stream (17a;17b) is measured again and the result compared again with the target biogenic carbon content of about 0 % to about 100 % (= the desired biogenic carbon content and setpoint of the control system) in case the tolerance limit is > +/- 50 % for a target biogenic carbon content of up to about 75 %, +/- 20 % for a target biogenic carbon content of about 75 % to about 90 %, and +/- 10 % for a target biogenic carbon content of about > 90 %. The deviation between the measured biogenic carbon content and target biogenic carbon content of about 0 % to about 100 % (= setpoint of the control system) is calculated again in this case and the flow rate of the first feed stream (13a;13b) and/or the flow rate of the first syngas stream (14a;14b) and/or the flow rate of the second syngas stream (16a;16b) is again adjusted according to said target biogenic carbon content of about 0 % to about 100 %. This control loop is repeated until said deviation is equal or smaller than a tolerance limit of +/- 50 % for a target biogenic carbon content of up to about 75 %, +/- 20 % for a target biogenic carbon content of about 75 % to about 90 %, and +/- 10 % for a target biogenic carbon content of about > 90 %. The "tolerance limit" value is the acceptable deviation in % of the measured biogenic carbon content from the target biogenic carbon content of about 0 % to about 100 % (= setpoint of the control system).

Preferably, the control unit (19a;19b) and the at least one measuring element (18a;18b) are part of a control system.

Preferably, the control system further comprises at least one control loop and at least one feedback controller.

The first feedstock (13a;13b) having a first biogenic carbon content which is undefined and preferably greater than zero is preferably a solid and/or liquid material or mixture of materials which comprise organic compounds and/or organic polymers. Said organic compounds and/or organic polymers contain biogenic carbon and/or carbon of fossil sources and/or carbon from post-consumer waste ("recycle content carbon"). The first feedstock (13a;13b) may further contain impurities such as inorganic components and metallic components.

Preferably, the feedstock (13) is a solid and/or liquid feedstock and is selected from the group comprising carbonaceous products from crude oil refining extra heavy crude oil, tar sand, bitumen, coke, biomass, waste, mixtures thereof, and mixtures thereof with fossil feedstocks such as coal, oil, and natural gas.

The term "biomass" includes but is not limited to wood, wood pellets, wood chips, straw, lignocellulosic biomass, energy crops, algae, biobased-oils, and biobased-fats (preferably hydrated).

The term "waste" comprises fossil-based waste, biogenic waste, and mixtures thereof. Examples for waste suitable as a feedstock are agricultural/farming residues such as wood processing residues, waste wood, logging residues, switch grass, discarded seed corn, corn stover and other crop residues, municipal solid waste (MSW), textiles, industrial waste, sewage sludge, plastic waste, packaging waste, shredder residues such as car shredder residues and mixtures thereof.

Preferably, the first feedstock (13a;13b) is selected from the group comprising biomass, municipal solid waste (MSW), shredder residues such as car shredder residues, textiles, plastic waste, packaging waste, and mixtures thereof.

The first feedstock (13a;13b) is inserted as a first feed stream (13a;13b) into the first feeding device (12a;12b).

The second feedstock from which the second syngas stream (16a;16b) having a second biogenic carbon content which is defined and optionally greater than zero is obtained is preferably selected from the group comprising fossil feedstocks, biomass, waste and mixtures thereof.

The term "fossil feedstocks" includes but is not limited to carbonaceous products from crude oil refining extra heavy crude oil, tar sand, bitumen, coke, high vacuum residues (HVRs) coal, oil, natural gas, methane and mixtures thereof.

The term "biomass" includes but is not limited to wood, wood pellets, wood chips, straw, lignocellulosic biomass, energy crops, algae, biobased-oils, and biobased-fats (preferably hydrated).

The term "waste" comprises fossil-based waste, biogenic waste, and mixtures thereof. Examples for waste suitable as a feedstock are agricultural/farming residues such as wood processing residues, waste wood, logging residues, switch grass, discarded seed corn, corn stover and other crop residues, municipal solid waste (MSW), textiles, industrial waste, sewage sludge, plastic waste, packaging waste, shredder residues such as car shredder residues and mixtures thereof.

The method used to provide the second syngas stream (16a;16b) can be in principle any known and suitable method for converting a feedstock into syngas. Suitable syngas production methods comprise steam reforming, partial oxidation of e.g., natural gas or liquid hydrocarbons, or gasification of a feedstock such as coal. Such methods are standard in the (petro-)chemical industry and the method may be selected from those methods available at the same location where the system according to the present invention is installed and the method according to the present invention is practiced.

A feed stream consisting of hydrocarbon feedstocks having a fossil origin and product streams (e.g., syngas, methane, methanol, Fischer-Tropsch hydrocarbons) obtained from conversion of hydrocarbon feedstocks having a fossil origin are essentially free of ¹⁴C. All ¹⁴C in a product stream is contributed by the biogenic carbon in the first feed stream (13a;13b) and/or the biogenic carbon content in the second syngas stream (16a;16b).

The target biogenic carbon content in the combined syngas stream (17a;17b) and/or optional further chemical product(s) is obtained with the system and method according to the present invention by varying the flow rate of the first feed stream (13a;13b) having an undefined biogenic carbon content and/or the flow rate of the first syngas stream (14a;14b) having an undefined biogenic carbon content and/or the flow rate of the second syngas stream (16a;16b) having a defined biogenic carbon content.

In one embodiment of the present invention the target biogenic carbon content in the combined syngas stream (17a;17b) and/or optional further chemical product(s) is controlled by adjusting the flow rate of the second syngas stream (16a;16b) having a defined biogenic carbon content. For example, in case the biogenic carbon content of the first feed stream (13a;13b) and the first syngas stream (14a;14b) is decreasing (because of the fluctuation), the flow rate of the second syngas stream (16a;16b) having (in this particular example) a higher biogenic carbon content than the decreased biogenic carbon content of the first feed stream (13a;13b) and the first syngas stream (14a;14b) will be increased until the deviation calculated in step (vi) of the method according to the present invention is equal or smaller than a tolerance limit of +/- 50 % for a target biogenic carbon content of about 75 %, +/- 20 % for a target biogenic carbon content of about 75 % to about 90 %, and +/- 10 % for a target biogenic carbon content of about > 90 %.

The system according to a second embodiment of the present invention is shown in Figure 2a and Figure 2b.

A system for producing syngas comprising at least one gasifier (21a;21b) receives a first feed stream of a first feedstock (23a;23b) having a first biogenic carbon content from a first feeding device (22a;22b). The at least one gasifier is downstream of and fluidically connected to the first feeding device (22a;22b). The first feedstock is converted into a first syngas stream (24'a;24'b) by a gasification reaction. The first syngas stream (24'a;24'b) is leaving the at least one gasifier (21a;21b) in downstream direction and optionally impurities are removed in at least one optional syngas purification unit (not shown in Figures 2a and 2b) which is downstream of and fluidically connected to the at least one gasifier (21a;21b). The first syngas stream (24'a;24'b) is then fed into an optional first syngas split unit (24a;24b) which is downstream of and fluidically connected to the at least one gasifier or to the at least one optional syngas purification unit. The first syngas stream (24'a;24'b) is split (divided) in the optional first syngas split unit (24a;24b) into a first portion of the first syngas stream (24"a;24"b) and into a second portion of the first syngas stream (24‴a;24‴b). The second portion of the first syngas stream (24‴a;24‴b) is then fed into the mixing device (25a;25b) which is downstream of and fluidically connected to the first syngas split unit (24a;24b). The amount of the second portion of the first syngas stream (24‴a;24‴b) leaving the optional first syngas split unit (24a;24b) in respect to the flow rate of the first syngas stream (24'a;24'b) entering the first syngas split unit (24a;24b) ranges from 0.1 to 100 %. The remaining portion of the first syngas stream (24'a;24'b) leaves the optional first syngas split unit (24a;24b) as first portion of the first syngas stream (24"a;24"b) in downstream direction and can be used for other purposes.

Accordingly, the flow rate of the first syngas stream (24'a;24'b) can be adjusted by changing the ratio of the first portion of the first syngas stream (24"a;24"b) and the second portion of the first syngas stream (24‴a;24‴b) which leave the first syngas split unit (24a;24b).

A second syngas stream (26'a;26'b) is provided and enters an optional second syngas split unit (26a;26b) in which the second syngas stream (26'a;26'b) is split (divided) into a first portion of the second syngas stream (26"a;26"b) and a second portion of the second syngas stream (27‴a;27‴b) which leave the optional second syngas split unit (26a;26b) in downstream direction. The first portion of the second syngas stream (26"a;26"b) is fed into the mixing device (25a) which is downstream of and fluidically connected to the optional second syngas split unit (27a;27b). The first portion of the second syngas stream (26"a;26"b) leaving the optional second syngas split unit (26a;26b) ranges from 0 to 99.9 % of the second syngas stream (26'a;26'b) entering the second syngas stream split unit (26a;26b). The remaining portion of the second syngas stream (26'a;26'b) leaves the second syngas split unit (26a;26b) as second portion of the second syngas stream (26‴a;26‴b) in downstream direction and can be used for other purposes. The optional second syngas split unit (26a;26b) is upstream of the mixing device (25a;25b).

Accordingly, the flow rate of the second syngas stream (26'a;26'b) can be adjusted by changing the ratio of the first portion of the second syngas stream (26'a;26"b) and the second portion of the second syngas stream (26‴a;26‴b) which leave the second syngas split unit (26a;26b).

The system according to the second embodiment comprises a first syngas split unit (24a;24b) which is downstream of and fluidically connected to the at least one gasifier or to the at least one syngas purification unit and/or a second syngas split unit (26a;26b) which is upstream of the mixing device (25a;25b).

The system according to the second embodiment optionally comprises a first syngas stream split unit (24a;24b) which is downstream of and fluidically connected to the at least one gasifier or to the optional at least one syngas purification unit (not shown in Figures 2a and 2b) and upstream of and fluidically connected to the mixing device (25a;25b) and/or a second syngas stream split unit (26a;26b) which is downstream of and fluidically connected to the second syngas stream (26'a;26'b) and upstream of the mixing device (25a;25b).

A system according to the present invention further comprising a first syngas stream split unit (24a;24b) and/or a second syngas stream unit (26a;26b) enables a steady production of a first syngas stream (24'a;24'b) in the at least one gasifier (21b) while a temporary surplus of first syngas (24'a;24b') caused by the undefined biogenic carbon content of the first syngas stream (24'a;24b') can be bypassed with the first syngas stream split unit (24a;24b) to obtain the target biogenic carbon content in the combined syngas stream (27a;27b) and/or the optional first chemical product and/or the optional second chemical product and/or the third chemical product. Likewise, a temporary surplus of second syngas (26'a;26'b) caused by the undefined biogenic carbon content of the first syngas stream (24'a;24b') can also be bypassed with the optional second syngas stream split unit (26a;26b) if necessary.

In case impurities are not removed from the first syngas stream (24'a;24'b), impurities will then be removed from the combined syngas stream (27a;27b) in at least one syngas purification unit downstream of and fluidically connected to the mixing device (25a;25b).

In a first aspect of the second embodiment, the system further comprises at least one measuring element (28a) for measuring the biogenic carbon content of the first syngas stream (24'a) . This first aspect of the first embodiment is shown in Figure 2a.

In a second aspect of the second embodiment, the system further comprises at least one measuring element (28b) for measuring the biogenic carbon content of the combined syngas stream (27b). This second aspect of the second embodiment is shown in Figure 2b.

Both aspects of the second embodiment can also be combined in a single second embodiment in which the system comprises at least one measuring element (28a) for measuring the biogenic carbon content of the first syngas stream (24'a) and/or the combined syngas stream (27a;27b).

The at least one measuring element (28a;28b) is fluidically connected to said first syngas stream (24'a) in the first aspect of the second embodiment, and/or fluidically connected to said combined syngas stream (27b) in the second aspect of the second embodiment and/or fluidically connected to said first syngas stream (24'a) and/or combined syngas stream (27b) in the further aspect of the second embodiment.

The system further comprises a control unit (29a;29b) for adjusting the feed flow rate of the first feed stream (23a;23b) of the first feedstock and/or the first syngas stream (24'a;24'b) and/or the second syngas stream (26'a;26'b) according to a target biogenic carbon content of about 0 % to about 100 % in the combined syngas stream (27a;27b) and/or the optional first chemical product and/or the optional second chemical product and/or the optional third chemical product, and/or the flow rate of the first syngas stream (24'a;24'b) and/or the flow rate of the second syngas stream (26'a;26'b) is adjusted using a first syngas stream split unit (24a;24b) and/or a second syngas stream split unit (26a;26b) as described above according to a target biogenic carbon content of about 0 % to about 100 % in the combined syngas stream (27a;27b) and/or the optional first chemical product and/or the optional second chemical product and/or the optional third chemical product

The method used to provide the second syngas stream (26'a;26'b) can be in principle any known and suitable method for converting a feedstock into syngas. Suitable syngas production methods comprise steam reforming, partial oxidation of e.g., natural gas or liquid hydrocarbons, or gasification of a feedstock such as coal. Such methods are standard in the (petro-)chemical industry and the method may be selected from those methods available at the same location where the system according to the present invention is installed and the method according to the present invention is practiced.

The further disclosure made for the first embodiment of the present invention made above applies also to the second embodiment of the present invention.

In a third embodiment of the present invention, the system comprises in addition at least a first further process unit downstream of and fluidically connected to the mixing device (Figure 3a) or a first syngas stream processing unit downstream of and fluidically connected to the at least one syngas purification unit (Figure 3b).

Preferably, the first further process unit (40a) downstream of and fluidically connected to the mixing device (35a) is a water-gas shift unit in which the first molar ratio H₂ : CO of the combined syngas stream (38a) is changed ("shifted") to obtain a combined syngas stream (41a) having a second molar ratio H₂ : CO.

Preferably, the first syngas stream processing unit (35b) is a water-gas shift unit in which the first molar ratio H₂ : CO of the first syngas stream (34b) is changed ("shifted") to obtain a first syngas stream (38b) having a second molar ratio H₂ : CO.

The system according to the third embodiment of the present invention comprises at least one gasifier (31a;31b) which receives a first feed stream (33a;33b) of a first feedstock having a first biogenic carbon content from a first feeding device (32a;32b). The at least one gasifier (31a;31b) is downstream of and fluidically connected to the first feeding device (32a;32b). The first feedstock is converted into a first syngas stream (34a;34b) by a gasification reaction in the at least one gasifier (31a;31b). Impurities are removed from the first syngas stream (34a;34b) in at least one syngas purification unit (not shown in Figures 3a and 3b) downstream of and fluidically connected to the at least one gasifier (31a;31b) or in at least one syngas purification unit downstream and fluidically connected to the mixing device (35a). The first syngas stream (34a;34b) leaves the at least one syngas purification unit or the at least one gasifier (31a;31b) and is fed into a mixing device (35a) which is downstream of and fluidically connected to the at least one syngas purification unit or the at least one gasifier (31a;31b) or is fed into a first syngas stream split unit (not shown in Figures 3a and 3b) which is downstream of and fluidically connected to the at least one syngas purification unit or the at least one gasifier (31a;31b). The specifications and purpose of the first syngas stream split unit is described for the second embodiment of the present invention above and apply to this third embodiment likewise. In case the system comprises a first syngas stream split unit, a portion of the first syngas stream (34a) is fed into the mixing device (35a) which is downstream of and fluidically connected to the optional first syngas stream split unit.

A second syngas stream (36a) is fed into the mixing device (35a) or into a second syngas split unit (not shown in Figures 3a and 3b). The specifications and purpose of the second syngas stream split unit is described for the second embodiment of the present invention above and apply to this third embodiment likewise. In case the system comprises a second syngas stream split unit, a portion of the second syngas stream (36a) is fed into the mixing device (35a) which is downstream of and fluidically connected to the optional second syngas stream split unit.

The system optionally comprises a first syngas stream split unit which is downstream of and fluidically connected to the at least one syngas purification unit (or downstream of and fluidically connected to the at least one gasifier (31a;31b)) and upstream of and fluidically connected to the mixing device (35a) or the optional first syngas stream process unit and/or a second syngas stream split unit which is downstream of and fluidically connected to the second syngas stream and upstream of the mixing device (35a).

A first further chemical process unit (40a) is in a first aspect of the third embodiment downstream of and fluidically connected to the mixing device (35a) or the optional at least one syngas purification unit. Accordingly, a combined syngas stream (38a) leaves the mixing device (35a) in downstream direction and enters the first further process unit (40a) which is downstream of and fluidically connected to the mixing device (35a) or prior to that the optional at least one syngas purification unit. An optional second further process unit (43a) may be downstream of and fluidically connected to the first further process unit (40a). An optional third further process unit (46a) may be downstream of and fluidically connected to the optional second further process unit (43a).

A first syngas stream processing unit (35b) in a second aspect of the third embodiment (Figure 3b) is downstream of and fluidically connected to the at least one syngas purification unit or downstream of and fluidically connected to the optional first syngas stream split unit (not shown in Figure 3b). In this second aspect of the third embodiment, the first syngas stream processing unit (35b) is preferably a water-gas shift unit in which the molar ratio H₂ : CO of the first syngas stream (34b) is changed ("shifted") to a second molar ratio H₂ : CO which has a higher H₂ amount. The first syngas stream having a second molar ratio H₂ : CO (38b) leaves the water-gas shift unit (35b) in downstream connection and is fed into the mixing device (40b). The second syngas stream (36b) is also fed into the mixing device (40b) or the first portion of the second syngas stream is fed into the mixing device (40b) in case the system comprises a second syngas split unit (not shown in Figure 3b) which, in this optional aspect, is upstream of and fluidically connected to the mixing device (40b). A combined syngas stream (41b) leaves the mixing device (40b) in downstream direction. An optional first further process unit (43b) is downstream of and fluidically connected to the mixing device (40b). An optional second further process unit (46b) is downstream of an fluidically connected to the optional first further process unit (43b). The system further comprises at least one measuring element (37a;37b;39a;39b;42a;42b;45a;45b;48a;48b) for measuring the biogenic carbon content of the first syngas stream (34a;34b;38b) and/or the combined syngas stream (38a;41b), said at least one measuring element (37a;37b;39a;39b;42a;42b;45a;45b;48a;48b) is fluidically connected to said first syngas stream (34a;34b;38b) and/or the combined syngas stream (38a;41b).

Measurement of the biogenic carbon content with one or more of measuring elements (37a;37b;39a;39b) is preferred because the control hysteresis is minimized in comparison when the biogenic carbon content is measured at a position further downstream of the system according to the present invention (i.e., with measuring element (42a;42b) and/or measuring element (45a;45b) and/or measuring element (48a;48b) instead of measuring element (37a;37b;39a;39b)). The time required until the change of flow rate made for the first feed stream (33a;33b) and/or the second syngas stream (36a;36b) resulting in a stable changed biogenic carbon content is minimized in case the biogenic carbon content is measured with a measuring element (37a;37b;39a;39b) fluidically connected to the first syngas stream (34a;34b) and/or the combined syngas stream (38a) and/or the first syngas stream having a shifted molar ratio H₂ : CO (38b).

An additional advantage of measuring the biogenic carbon content with a measuring element fluidically connected to the first syngas stream (34a;34b) and/or the combined syngas stream (38a) and/or the first syngas stream having a shifted molar ratio H₂ : CO (38b) is a reduced consumption of feedstock, energy and other resources until the target biogenic carbon content is reached by adjusting the flow rate of the first feed stream (33a;33b) and/or the first syngas stream (34a;34b) and/or the second syngas stream (36a;36b).

The first further process unit (40a) can be for example a water-gas shift unit, a CO₂ capture unit, a methanol synthesis unit or a methanation unit or a Fischer-Tropsch unit or a syngas separation unit wherein the composition of the combined syngas stream (38a) is changed (water-gas shift unit and/or CO₂ capture unit) or the combined syngas (38a) is converted (methanol synthesis unit, methanation unit, Fischer-Tropsch unit) or CO is separated from combined syngas stream (38a) (syngas separation unit). The first syngas stream processing unit (35b) is preferably a water-gas shift unit in which the first molar ratio H₂ : CO of the first syngas stream (34b) is changed ("shifted") to a second molar ratio H₂ : CO in the first syngas stream (38b).

An optional measuring element (42a;39b) is fluidically connected to the first chemical product stream (41a) or to the first syngas stream (38b) having a second molar ratio H₂ : CO.

In case the system according to the present invention further comprises such a first further process unit (40a), or a first syngas stream processing unit (35b) and a first further process unit (43b), said system comprises at least one measuring element (37a;37b;39a;39b) which is fluidically connected to the first syngas stream (34a;34b) and/or the combined syngas stream (38a) and/or the first syngas stream (38b) having a second molar ratio H₂ : CO leaving the first further process unit (35b).

The measuring element (37a;37b) can be fluidically connected to the first syngas stream (34a;34b).

Said system can also comprise two measuring elements, three measuring elements, four measuring elements or five measuring elements as shown in Figures 3a and 3b. The selection of one to five measuring elements (37a;37b;39a;39b;42a;42b;45a;45b;48a;48b) can be adapted to the specific setup of unit operation and other requirements of the system.

The combined syngas stream with a changed molar ratio H₂ : CO obtained from a water-gas shift unit and a syngas from which the CO₂ was removed in a CO₂ capture unit and captured CO₂ are "first chemical products" in the sense of the present invention. Accordingly, the term "first chemical product" comprises the combined syngas stream with a changed molar ratio H₂ : CO, syngas from which the CO₂ was removed, methanol, methane or Fischer-Tropsch hydrocarbons obtained from the combined syngas stream (38a;41b) and CO separated from syngas.

Optionally, a second further process unit (43a;46b) is downstream of and fluidically connected to the optional first further process unit (40a;43b). A second chemical product stream (44a;47b) is leaving the second further process unit (43a;46b) in downstream direction.

In case the system according to the present invention further comprises a first syngas stream process unit (35b) downstream of and fluidically connected to the at least one syngas purification unit or the optional first syngas split unit or a first further process unit (40a) downstream of and fluidically connected to a the mixing device (35a), and a second further process unit (43a) downstream of and fluidically connected to the first further process unit (40a) or the mixing device (in case the first further process unit is downstream of and fluidically connected to the at least one syngas purification unit or the first syngas split unit (40b)), said system comprises at least one measuring element (37a;37b;39a;39b;42a;42b;45a;45b) which is fluidically connected to the first syngas stream (34a;34b) leaving the at least one syngas purification unit and/or the combined syngas stream (38a;41b) and/or the first syngas stream having a shifted molecular ration H₂ : CO (38b) leaving the first syngas stream process unit (35b).

Said system can also comprise two measuring elements, for example, a first measuring element (37a;37b) fluidically connected to the first syngas stream (34a;34b) leaving the at least one syngas purification unit and a second measuring element (42a;45b) fluidically connected to the first chemical product stream (41a;44b) or a first measuring element (39a;42b) fluidically connected to the combined syngas stream (38a;41b) leaving the mixing device (35a;40b) and a second measuring element (45a;48b) fluidically connected to the second chemical product stream (44a;47b).

Said system can also comprise three measuring elements, for example, a first measuring element (39a;42b) fluidically connected to the combined syngas stream (38a;41b) leaving mixing device (35a;40b), a second measuring element (42a;45b) fluidically connected to the first chemical product stream (41a;44b) and a third measuring element (45a;48b) fluidically connected to the second chemical product stream (44a;47b).

Measurement of the biogenic carbon content with one or more of measuring elements (37a;37b;39a;42b) is preferred because the reasons explained above.

An example of such a system comprises a water-gas shift unit as the first further process unit (40a) from which a first chemical product (41a) is obtained or as a first syngas stream process unit (35b) from which a first syngas stream (38b) having a second molar ratio H₂ : CO is obtained. Such a system may further comprise a CO₂ capture unit as the second process unit (43a) or first further process unit (43b) from which a combined syngas stream (44a;44b) with removed CO₂ is obtained.

Optionally, a third further process unit (46a) or a second further process unit (46b) is downstream of and fluidically connected to the optional second further process unit (43a) or optional first further process unit (43b).

Measurement of the biogenic carbon content with one or more of measuring elements (37a;37b;39a;41b) is preferred because the reasons explained above.

An example of such a system comprises a water-gas shift unit as the first further process unit (40a;35b), a CO₂ capture unit as the second further process unit (43a;43b) and a methanol synthesis unit as the third further process unit (46a;46b) in which syngas (having a modified molar ratio H₂ : CO in respect to the syngas (38a;34b) and from which the CO₂ was removed) is converted into methanol as third chemical product (47a;47b). Another example of such a system comprises a water-gas shift unit as the first further process unit (40a;35b), a CO₂ capture unit as the second further process unit (43a;43b) and a methanation unit as the third further process unit (47a;47b) in which syngas is converted into methane.

More further process units and measuring elements can be added to the system in the way described above and shown in Figures 3a and 3b.

Preferably, the optional first further process unit (40a) and the first syngas stream process unit (35b) are water-gas shift process units.

Preferably, the optional third further process unit (46a) and the optional second further process unit (46a) are selected from the group consisting of methanol synthesis unit, methanation process unit, Fischer-Tropsch unit, and syngas separation unit.

The first syngas stream (34a) and the second syngas stream (36a) is combined in the mixing device (35a) and the resulting combined syngas stream (38a) is then fed into a first further process unit (40a). Optionally, a first syngas stream split unit and/or a second syngas stream split unit are/is used and only a portion of the first syngas stream (34a) and/or a portion of the second syngas stream (36a) is fed into the mixing device (35a) and the remaining portion of the first syngas stream (34a) and/or the remaining portion of the second syngas stream (36a) can be used for another purpose. Optionally, impurities are removed from the combined syngas stream (34a) in at least one optional syngas purification unit which is downstream of and fluidically connected to the mixing device (35a) in case impurities have not been removed from the first syngas stream (34a) and/or the second syngas stream (36a) further upstream in the system according to the present invention.

The first syngas stream (34b) can be fed into a first further process unit such as a water-gas shift unit and the resulting first syngas stream (38b) having a second molar ratio H₂ : CO is then combined with the second syngas stream in the mixing device (40b) to form a combined syngas stream (41b) which can then be converted in a second further process unit (43b). Optionally, a first syngas stream split unit is used and only a portion of the first syngas stream (34b) is converted in the first further process unit (35b). Optionally, a second syngas split unit is used and only a portion of the second syngas stream (36b) is fed into the mixing device (40b). The remaining portion of the first syngas stream (34b) and/or the remaining portion of the second syngas stream (36b) can be used for another purpose in this case.

Optionally, a fist syngas stream split unit is downstream of and fluidically connected to the water-gas shift unit (35b) (not shown in Fig. 3b).

Chemical products having a target biogenic carbon content of about 0 % to about 100 % according to the present invention comprise syngas, CO₂, methane, methanol and downstream products, Fischer-Tropsch hydrocarbons and downstream products, and CO separated from syngas. Accordingly, the system optionally comprises further unit operations downstream of the gasifier to obtain these chemical products. Said optional further unit operations will be discussed below.

The first syngas stream (34b) or the combined syngas stream (38a) having a first molar ratio H₂ : CO is then optionally subjected to a water-gas shift reaction in a water-gas shift unit (40a;35b). Thereby, the H₂ content in the first syngas stream (34b) or the combined syngas stream (38a) is increased by reacting a portion of the CO of the first syngas stream (34b) or the combined syngas stream (38a) with water to form additional H₂ and CO₂ and thereby a syngas stream (41a;38b) having a second molar ratio H₂ : CO is formed and leaves the water-gas shift unit. The H₂ content in said syngas stream (41a;38b) leaving the water-gas shift unit and having a second molar ratio H₂ : CO is higher than in said first syngas stream (34b) or the combined syngas stream (38a) leaving the gasifier and having a first molar ratio H₂ : CO.

The water-gas shift reaction will operate with a variety of catalysts (such as copper-zinc-aluminum catalysts and chromium or copper promoted iron-based catalysts) in the temperature range between about 200 °C and about 480 °C.

Optionally, the first molar ratio H₂ : CO of the first syngas stream is converted to a first syngas stream having a second molar ratio H₂ : CO already inside the at least one gasifier by adapting the reaction conditions inside the at least one gasifier. In such a case, a first syngas stream having a second molar ratio H₂ : CO can be produced without an additional water-gas shift unit.

The water-gas shift unit (40a;35b) is downstream of and fluidically connected to the syngas producing unit comprising at least one gasifier (31a) or downstream of and fluidically connected to the mixing device (35b). The Optional first and/or second syngas stream split unit(s) can be part of the system as described above.

A CO₂ capture unit (43a) is optionally downstream of and fluidically connected to a water-gas shift unit (40a) or a mixing device (40b). CO₂ present in the combined syngas stream (44a;44b) is removed from said combined syngas stream (44a;44b) in the optional CO₂ capture unit (43a;43b) and a combined syngas stream (44a;44b) comprising a reduced amount of CO₂ is leaving the optional CO₂ capture unit (43a;43b).

Preferably, the water-gas shift unit (40a;35b) is replaced by a water-gas-shift unit downstream of and fluidically connected to the mixing-device (40b) in case the second syngas of the second syngas stream is manufactured in a second gasifier.

A variety of optional CO₂ capture units (43a;43b) and optional methods for CO₂ capture are commercially used and can be selected and adapted by a skilled person to the systems and methods according to the present invention. Suitable methods for CO₂ removal from syngas include membrane separation, absorption, adsorption with e.g., pressure-swing-adsorption (PSA) or MOFs (metal organic frameworks).

Preferably, CO₂ is removed from the syngas by absorption. The syngas is contacted with an aqueous solution of alkylamines such as monoethanolamine, diethanolamine, methyldiethanolamine and the like or methanol. CO₂ is captured in such solutions/liquids in a chemical reaction and then directed to a "regenerator" (e.g., a stripper with a boiler) where the acid-base reaction is reversed whereby CO₂ and the recycled alkylamine is obtained. This absorption method is also known as "scrubbing". Most preferably, CO₂ in the syngas is removed by absorption using methanol. Also, H₂S is removed from the syngas when using methanol is such an absorption method.

CO₂ is another of the chemical products having a target biogenic carbon content which can be produced with the systems and methods according to the present invention. CO₂ can be for example further converted into methanol or CO.

Methane is another of the chemical products having a target biogenic carbon content which can be produced with the systems and methods according to the present invention. Methane is formed in a methanation (process) unit. The optional methanation unit can be downstream of and fluidically connected to the mixing device (35a) unit or a mixing device (40b).

In another embodiment of the present invention, the methanation unit is downstream of and fluidically connected to a water-gas shift unit (40a). In still another embodiment of the present invention, the methanation unit is downstream of and fluidically connected to a CO₂ capture unit (43a;43b).

The methanation reaction is described by chemical reaction schemes (1) and (2):

CO + 3H₂ → CH₄ + H₂O (1)

CO₂ + 4H₂ → CH₄ + 2H₂O (2)

The methanation reaction and suitable methanation units are for example described in S. Rönsch, J. Schneider, S. Matthischke, M. Schlüter, M. Götz, J. Lefebvre, P. Prabhakaran, S. Bajohr: Review on methanation - From fundamentals to current projects; Fuel 166 (2016) 276-296 and can be selected and adapted by the skilled person.

The methanation reaction is for example a catalytic reaction using nickel on alumina catalysts, preferably a honeycomb shape catalyst, at 1 to 70 bar and 200 to 700 °C, preferably 5 to 60 bar, more preferably 10 to 45 bar and preferably 200 to 550 °C, more preferably 10 to 45 bar.

Methanol is another of the chemical products having a target biogenic carbon content which can be produced with the systems and methods according to the present invention. Methanol is produced from syngas by a catalytic gas phase reaction at about 5 to 10 MPa and a temperature of about 200 °C to about 300 °C using a catalyst in a low-pressure methanol process in e.g., adiabatic reactors or quasi-isothermal reactors. The syngas is provided by the gasifier and/or the water-gas shift unit and/or the optional CO₂ capture unit. The catalyst is for example a mixture of copper and zinc oxides, supported on alumina. The methanol synthesis and various options thereof suitable to be combined with the production system according to the present invention are disclosed in Ullmann's Encyclopedia of Industrial Chemistry (2012), Chapter "Methanol", p. 3 to 12.

Preferably, methanol is further converted to downstream products, e.g., by a methanol-to-olefins (MTO) process to olefins such as ethene and propene or by a methanol to gasoline (MTG) process to fuels, preferably to jet fuel.

In the MTG process, methanol is converted over a catalyst, generally a zeolithe, preferably an acidic zeolithe, like SAPO-34 or HZSM-5 to a mixture of olefins, aliphatics, and aromatics, generally up to C11. Suitable reaction conditions are for example 350-400°C, and atmospheric pressure. The hydrocarbon mixture obtained is suitable as gasoline, especially as jet fuel.

The MTO process is the catalytic conversion of methanol to lower olefins, especially ethene and/or propene. An interruption of the MTG reaction, by careful control over process conditions (T, space velocity), leeds to the methanol-to-olefins process (MTO). As in the MTG process, generally a zeolithe, preferably an acidic zeolithe, like SAPO-34 or HZSM-5 is used as catalyst. Further details regarding the MTG and the MTO process are known in the art and for example described in Makarand R. Gogate (2019) Methanol-to-olefins process technology: current status and future prospects, Petroleum Science and Technology, 37:5, 559-565, DOI: 10.1080/10916466.2018.1555589 and the literature mentioned therein.

Suitable MTG processes comprise the Mobile MTG Process, Topsøe improved gasoline synthesis (TiGAS) and Syngas to Gasoline plus Process (STG+).

The clean syngas can be converted into hydrocarbons such as light synthetic crude oil in an optional Fischer-Tropsch (FT) reaction unit by the FT process. Such hydrocarbons are also denoted "Fischer-Tropsch hydrocarbons". The light synthetic oil can be further converted to downstream products by hydrocracking and/or isomerization to naphtha, light olefins or diesel fuel or jet fuel, most preferably jet fuel. By said process, so called FT-SPK fuels and FT-SKA fuels are for example obtained. FT-SPK fuels are fuels using biomass resources (e.g. wood residues) and FT-SKA fuels are FT fuels with aromatics using biomass resources (e.g. wood residues). Suitable FT processes and reactors and suitable subsequent processes and reactors for obtaining naphtha, light olefins, gasoline, fuel ("FT fuels") like diesel fuel or jet fuel are known in the art. For production of gasoline and light olefins, the FT process is operated in a temperature range of about 330 °C to about 350 °C and a pressure of about 2.5 MPa (high-temperature FT-process), for production of waxes and/or diesel fuel, in a temperature range of about 220 °C to about 250 °C and a pressure of about 2.5 MPa to about 4.4 MPa (low-temperature FT-process). Suitable reactors for low-temperature FT-processes comprise tubular fixed-bed reactors and slurry bed reactors. Suitable reactors for high-temperature FT-processes comprise circulating fluidized-bed reactors and SAS (Sasol advanced synthol) reactors. Iron- and/or cobalt-based catalysts are used for the FT-process. The Fischer-Tropsch synthesis and various options thereof suitable to be combined with the production system according to the present invention are disclosed in Ullmann's Encyclopedia of Industrial Chemistry (2012), Chapter "Coal Liquefaction", p. 20 to 33.

CO separated from the syngas is another of the chemical products having a target biogenic carbon content which can be produced with the systems and methods according to the present invention. CO can be separated from the syngas in a syngas separation unit which is downstream of and fluidically connected to the syngas producing unit comprising at least one gasifier. CO can be separated from syngas by cryogenic separation methods, commonly referred to as a "cold box" which makes use of the different boiling points of CO and H₂. H₂ can be separated using H₂-selective membranes thorough which H₂ permeates and is thereby separated from a syngas stream.

The system according to the present inventions and all embodiments and variations thereof can be used for a method for producing a combined syngas stream and/or at least one chemical product from said combined syngas stream having a target biogenic carbon content of about 0 % to about 100 %, the method comprising the steps:
(i) feeding a first feed stream of a first feedstock having a first biogenic carbon content through a first feeding device into a gasifier to obtain a first syngas stream with a flow rate and a first molar ratio H₂ : CO,
   wherein the biogenic carbon content of the first feedstock and the first syngas stream is undefined, wherein said first feedstock is solid;
(ii) providing a second syngas stream with a flow rate and a second biogenic carbon content, wherein the second biogenic carbon content is defined;
(iii) optionally changing the molar ratio H₂ : CO of the first syngas stream to a second molar ratio H₂ : CO;
(iv) combining the first syngas stream or the first syngas stream with a second molar ratio H₂ :
   CO with the second syngas stream in a mixing device
   and thereby forming a combined syngas stream having a combined biogenic carbon content,
   optionally converting said the combined syngas stream into a first chemical product in a first further process unit,
   optionally converting said optional first chemical product in a second further process unit into a second chemical product,
   optionally converting said second chemical product in a third further process unit into a third chemical product;
(v) measuring the biogenic carbon content of the first syngas stream and/or the combined syngas stream;
(vi) calculating the deviation between said target biogenic carbon content and the at least one biogenic carbon content measured in step (v);
(vii) adjusting the flow rate of the first feed stream or the first feed stream and the flow rate of the first syngas stream and/or the flow rate of the second syngas stream;
(viii) repeating steps (i) to (vii) until said deviation calculated in step (vi) is equal or smaller than a tolerance limit of +/- 50 % for a target biogenic carbon content of about 75 %, +/- 20 % for a target biogenic carbon content of up to about 75 % to about 90 %, and +/- 10 % for a target biogenic carbon content of about > 90 %.

Preferably, the flow rate of the stream selected from first feed stream and second syngas stream contributing a higher biogenic carbon content to the combined syngas stream per time is adjusted in step (vii). More preferably, the flow rate of the stream selected from first feed stream and syngas stream contributing a higher biogenic carbon content to the combined syngas stream per time is adjusted in step (vii) by a flow controller. Most preferably, the flow rate of the stream selected from first feed stream and second syngas stream contributing a higher biogenic carbon content to the combined syngas stream per time is adjusted in step (vii) by a flow controller which is fluidically connected to said stream selected from first feed stream and second syngas stream having a higher biogenic carbon content.

Preferably, said deviation is applied as a control signal to the flow controller fluidically connected to the feeding device of the stream selected from first feed stream and second syngas stream contributing a higher biogenic carbon content to the combined syngas stream per time than the other stream selected from first feed stream and second syngas stream wherein the biogenic carbon content of the second syngas stream is defined and was, preferably, determined before the second syngas stream is fed into the mixing device.

Optionally, said combined syngas stream is further converted in at least one further process unit downstream of and fluidically connected to the mixing device, the process unit selected from the group comprising water-gas shift unit, CO₂ capture unit, methanol synthesis unit, methanation unit and syngas separation unit, and wherein at least one chemical product stream having a biogenic carbon content is provided by said at least one further process unit.

Optionally, the first syngas stream formed in step (i) is further converted in a first syngas stream process unit downstream of and fluidically connected to the at least one syngas purification unit or the optional first syngas stream split unit, wherein the first syngas stream process unit is a water-gas shift unit from which a first syngas stream having a different ("shifted") molar ratio H₂ : CO than the syngas obtained from the gasifier is obtained. The first syngas stream having a second molar ratio H₂ : CO is then combined with the second syngas stream in a mixing device to form a combined syngas stream.

Preferably, the combined syngas stream formed in step (iv) is further converted in a first further process unit downstream of and fluidically connected to the mixing device, and in an optional second further process unit downstream of and fluidically connected to the first further process unit, and in an optional third further process unit downstream of and fluidically connected to the second further process unit Preferred sequences of process units are summarized in Table 1.

**Table 1: Preferred sequences of downstream process units.**

| 1^{st} syngas stream unit | 1^{st} further process unit | 2^{nd} further process unit | 3^{rd} further process unit |
|---|---|---|---|
| WGS | methanol synthesis | MTO | --- |
| WGS | methane synthesis | --- | --- |
| WGS | Fischer-Tropsch | --- | --- |
| WGS | syngas separation | --- | --- |
| WGS | CO₂ capture | methanol synthesis | MTO |
| WGS | CO₂ capture | methane synthesis | --- |
| WGS | CO₂ capture | Fischer-Tropsch | --- |
| WGS | CO₂ capture | syngas separation | --- |
| --- | WGS | methanol synthesis | MTO |
| --- | WGS | methane synthesis | --- |
| --- | WGS | Fischer-Tropsch | --- |
| --- | WGS | syngas separation | --- |
| --- | WGS | CO₂ capture | methanol synthesis |
| --- | WGS | CO₂ capture | methane synthesis |
| --- | WGS | CO₂ capture | Fischer-Tropsch |
| --- | WGS | CO₂ capture | syngas separation |

Methanol can be then optionally subjected to a methanol-to-olefin (MTO) reaction in a MTO reaction unit from which olefines having a biobased content such as ethene having a biobased content are obtained.

The system and method according to the present invention enable the continuous production of a combined syngas stream and, optionally, at least one chemical product having a target biogenic carbon content from a first feedstock and a first syngas stream having a first biogenic carbon content and a second syngas stream having a second biogenic carbon content, wherein, the biogenic carbon content of the first feedstock and the biobased content of the second syngas stream are different from each other. The first biogenic carbon content in the first feedstock is undefined but the system and method according to the present invention enable a continuous production of a combined syngas stream and, optionally, at least one chemical product having a target biobased content of about 0 % to about 100 % which is defined from said first feedstock and first syngas stream having an undefined biobased content and a second syngas stream having a defined biogenic carbon content.

The undefined of the first biogenic carbon content in the first feedstock and the first syngas stream can be caused by seasonal changes of e.g., biomass and/or an undefined composition when using e.g., municipal waste as a feedstock. The undefined first biogenic carbon content of the first feedstock and the first syngas stream is overcome by the system and method according to the present invention. Hence, a combined syngas stream and, optionally, at least one chemical product having a target biogenic carbon content of about 0 % to about 100 % can be continuously produced from the first feedstock and a first syngas stream having a first biogenic carbon content which is undefined and a second syngas stream having a second biogenic carbon content which is defined.

The invention further relates to a method, preferably according to the method described herein, comprising the step:
- converting the clean syngas, first chemical product, second chemical product and/or the third chemical product obtainable by or obtained by the method as described herein or a chemical material obtainable by or obtained by the method as described herein to obtain a monomer, polymer or polymer product.

The invention further relates to a method comprising the step:
- using the system as described herein to obtain syngas, a monomer, a polymer or a polymer product.

In a preferred embodiment, the monomer is a di- or polyol; preferably butandiol; aldehyde; preferably formaldehyde; di- or polyisocyanate; preferably methylene diphenyl diisocyanate (MDI), polymeric methylene diphenyl diisocyanate (pMDI), toluene diisocyanate (TDI), hexamethylenediisocyanate (HDI) or isophoronediisocyanate (IPDI); amide; preferably caprolactam; alkene; preferably styrene, ethene and norbornene; alkyne, (di)ester; preferably methyl methacrylate; mono or diacid; preferably adipic acid or terephthalic acid; diamine; preferably hexamethylenediamine, nonanediamine; or sulfones; preferably 4,4'-dichlorodiphenyl sulfone.

In a preferred embodiment, the polymer is and/or the polymer product comprises polyamide (PA); preferably PA 6 or PA 66; polyisocyanate polyaddition product; preferably polyurethane (PU), thermoplastic polyurethane (TPU), polyurea or polyisocyanurate (PIR); low-density polyethylene (LDPE), high-density polyethylene (HDPE), polyethylene (PE), polypropylene (PP), polyvinyl chloride (PVC), polyvinyl acetate (PVA), polystyrene (PS), poly acrylonitrile butadiene styrene (ABS), poly styrene acrylonitrile (SAN), poly acrylate styrene acrylonitrile (ASA), polytetrafluoroethylene (PTFE), poly(methyl acrylate) (PMA), poly(methyl methacrylate) (PMMA), polybutadiene (BR, PBD), poly(cis-1,4-isoprene), poly(trans-1,4-isoprene), polyoxymethylene (POM), polyethylene terephthalate (PET), polybutylene terephthalate (PBT), polybutylene adipate co-terephthalate (PBAT), polyester (PES), polyether sulfone (PESU), polyhydroxyalkanoate (PHA), poly-3-hydroxybutyrate (P3HB), poly-4-hydroxybutyrate (P4HB), polyhydroxyvalerate (PHV), polyhydroxyhexanoate (PHH), polyhydroxyoctanoate (PHO), polylactic acid (PLA), polysulfone (PSU), polyphenylene sulfone (PPSU), polycarbonate (PC), polyether ether ketone (PEEK), poly(p-phenylene oxide) (PPO), poly(p-phenylene ether) (PPE); or copolymer or mixture thereof.

In a preferred embodiment, the polymer and/or the polymer product is/are or is/are a part of:
- a part of a car; preferably cylinder head cover, engine cover, housing for charge air cooler, charge air cooler flap, intake pipe, intake manifold, connector, gear wheel, fan wheel, cooling water box, housing, housing part for heat exchanger, coolant cooler, charge air cooler, thermostat, water pump, radiator, fastening part, part of battery system for electromobility, dashboard, steering column switch, seat, headrest, center console, transmission component, door module, A, B, C or D pillar cover, spoiler, door handle, exterior mirror, windscreen wiper, windscreen wiper protection housing, decorative grill, cover strip, roof rail, window frame, sunroof frame, antenna panel, headlight and taillight, engine cover, cylinder head cover, intake manifold, airbag, cushion, or coating;
- a cloth; preferably shirt, trousers, pullover, boot, shoe, shoe sole, tight or jacket;
- an electrical part; preferably electrical or electronic passive or active component, circuit board, printed circuit board, housing component, foil, line, switch, plug, socket, distributor, relay, resistor, capacitor, inductor, bobbin, lamp, diode, LED, transistor, connector, regulator, integrated circuit (IC), processor, controller, memory, sensor, microswitch, microbutton, semiconductor, reflector housing for light-emitting diodes (LED), fastener for electrical or electronic component, spacer, bolt, strip, slide-in guide, screw, nut, film hinge, snap hook (snap-in), or spring tongue;
- a consumer, agricultural product or pharmaceutical product; preferably tennis string, climbing rope, bristle, brush, artificial grass, 3D printing filament, grass trimmer, zipper, hook and loop fastener, paper machine clothing, extrusion coating, fishing line, fishing net, offshore line and rope, vial, syringe, ampoule, bottle, sliding element, spindle nut, chain conveyor, plain bearing, roller, wheel, gear, roller, ring gear, screw and spring dampers, hose, pipeline, cable sheathing, socket, switch, cable tie, fan wheel, carpet, box or bottle for cosmetics, mattress, cushion, insulation, detergent, dishwasher tabs or powder, shampoo, body wash, shower gel, soap, fertilizer, fungicide, or pesticide;
- a packaging for the food industry; preferably mono- or multi-layer blown film, cast film (mono- or multi-layer), biaxially stretched film, or laminating film; or
- a part of a construction; preferably a rotor blade, insulating material, frame, housing, wall, coating, or separating wall.

In a preferred embodiment, the content of the first feedstock and/or the second feedstock in the syngas, monomer, polymer or polymer product is 1 weight-% or more, preferably 2 weight-% or more, more preferably 5 weight-% or more, more preferably 15 weight-% or more, more preferably 30 weight-% or more, more preferably 40 weight-% or more, more preferably 60 weight-% or more, more preferably 80 weight-% or more, more preferably 90 weight-% or more, more preferably 95 weight-% or more; and/or
the content of the first feedstock and/or the second feedstock in the syngas, monomer, polymer or polymer product is 100 weight-% or less, preferably 95 weight-% or less, more preferably 90 weight-% or less, more preferably 50 weight-% or less, more preferably 25 weight-% or less, more preferably 10 weight-% or less; and
preferably the content is determined based on identity preservation and/or segregation and/or mass balance and/or book and claim chain of custody models, preferably based on mass balance, preferably the International Sustainability and Carbon Certification (ISCC) standard.

The converting step(s) to obtain the monomer, polymer or polymer product may comprise one or more synthesis steps and can be performed by conventional synthesis and technics well known to a person skilled in the art. Independent of the person skilled in the art to assess novelty and inventive step of the independent claim(s), the person skilled in the art to perform the converting step(s) is preferably from the technical field(s) pyrolysis, gasification, remonomeriza-tion, depolymerization, synthesis, production of monomers, polymers and polymer compounds, and/or its further processing (e.g. extrusion, injection molding). Examples of the step(s) of the conversion is/are described in "Industrial Organic Chemistry", 3. volume, Wiley-VCH, 1997, ISBN: 978-3-527-28838-0, "Kunststoffhandbuch", 11 volumes in 17 sub-volumes, Carl Hanser Verlag; especially volume 6, "Polyamide", 1. edition, 1966, volume 7, "Polyurethane", 3. edition, 1993, and volume 8, "Polyester", 1. edition 1973; "Industrial Organic Chemistry", 3. volume, Wiley-VCH, 1997, ISBN: 978-3-527-28838-0, "Injection Molding Reference Guide, 4th edition, CreateSpace Independent Publishing Platform, 2011, ISBN: 978-1466407824, EP0989146 (A1), EP1460094 (A1), WO2006034800 (A1), EP1529792 (A1), WO2006042674 (A1), EP0364854 (A2), US5506275 (A), EP0897402 (A1), WO2015082316 (A1), WO2021021855 (A1), WO2021126938 (A1), WO2021021902 (A1), WO2021092311 (A1), WO2008155271 (A1), WO2013139827 (A1).

## Claims

1. System for producing syngas and/or at least one chemical product having a target biogenic carbon content of about 0 % to about 100 %, the system comprising:
- a syngas producing unit comprising a first feeding device for providing a first feed stream, at least one gasifier, at least one syngas purification unit for providing a first syngas stream, a mixing device and an optional first syngas stream process unit;
wherein the at least one gasifier is downstream of and fluidically connected to the first feeding device, wherein the at least one syngas purification unit is downstream of and fluidically connected to the at least one gasifier,
wherein said mixing device is downstream of and fluidically connected to the at least one syngas purification unit and downstream of and fluidically connected to a second syngas stream, or wherein said mixing device is downstream of and fluidically connected to said optional first syngas stream process unit and downstream of and fluidically connected to said second syngas stream, wherein said mixing device is receiving said first syngas stream and a second syngas stream and wherein a combined syngas stream is leaving said mixing device, and wherein the optional first syngas stream process unit is downstream of and fluidically connected to the at least one syngas purification unit,
wherein said first syngas stream has a first biogenic carbon content which is undefined, wherein said second syngas stream has a second biogenic carbon content which is defined, wherein said combined syngas stream has a combined biogenic carbon content, wherein said first feedstock is solid;
- optionally a first further process unit downstream of and fluidically connected to the mixing device, optionally a second further process unit downstream of and fluidically connected to the optional first further process unit and optionally a third further process unit downstream of and fluidically connected to the optional second further process unit, wherein a first chemical product leaves the optional first further process unit in downstream direction, a second chemical product leaves the optional second further process unit in downstream direction, and a third chemical product leaves the optional third further process unit in downstream direction;
- at least one measuring element for measuring the biogenic carbon content of the first syngas stream and/or the combined syngas stream;
- a control unit for adjusting the feed flow rate
of the first feed stream or
of the first feed stream and the first syngas stream and/or the second syngas stream according to a biogenic carbon content of about 0 % to about 100 % of the combined syngas stream.

2. System according to claim 1 wherein the at least one measuring element is electronically connected to the control unit.

3. System according to claim 1 or 2 wherein the system comprises at least one flow controller which is fluidically connected to
the first feed stream or
the first feed stream and the first syngas stream and/or the second syngas stream.

4. System according to claim 3 wherein the at least one flow controller is electronically connected to the control unit.

5. System according to any of claims 1 to 4 wherein the system comprises at least one measuring element which is fluidically connected to the first syngas stream and/or the combined syngas stream.

6. System according to any of claims 1 to 5 wherein the system further comprises a first syngas stream split unit which is downstream of and fluidically connected to the at least one gasifier or to the at least one syngas purification unit and upstream of and fluidically connected to the mixing device or the optional first syngas stream process unit and/or a second syngas stream split unit which is downstream of and fluidically connected to the second syngas stream and upstream of the mixing device.

7. System according to any one of claims 1 to 6 wherein least one chemical product having a target biogenic carbon content of about 0 % to about 100 % is selected from the group consisting of methanol, methane, Fischer-Tropsch hydrocarbons, CO, CO₂ and mixtures of CO and CO₂.

8. System according to any one of claims 1 to 7 wherein the control unit and the at least one measuring element are part of a control system.

9. System according to claim 8 wherein the control system further comprises at least one control loop and at least one feedback controller.

10. System according to any of claims 1 to 9 wherein the system further comprises at least a first further process unit downstream of and fluidically connected to the mixing device or a first syngas stream processing unit downstream of and fluidically connected to the at least one syngas purification unit.

11. Method for producing a combined syngas stream and/or at least one chemical product from said combined syngas stream having a target biogenic carbon content of about 0 % to about 100 %, the method comprising the steps:
(i) feeding a first feed stream of a first feedstock having a first biogenic carbon content through a first feeding device into a gasifier to obtain a first syngas stream with a flow rate and a first molar ratio H₂ : CO,
wherein the biogenic carbon content of the first feedstock and the first syngas stream is undefined, wherein said first feedstock is solid;
(ii) providing a second syngas stream with a flow rate and a second biogenic carbon content, wherein the second biogenic carbon content is defined;
(iii) optionally changing the molar ratio H₂ : CO of the first syngas stream to a second molar ratio H₂ : CO;
(iv) combining the first syngas stream or the first syngas stream with a second molar ratio H₂ : CO with the second syngas stream in a mixing device
and thereby forming a combined syngas stream having a combined biogenic carbon content,
optionally converting said the combined syngas stream into a first chemical product in a first further process unit,
optionally converting said optional first chemical product in a second further process unit into a second chemical product,
optionally converting said second chemical product in a third further process unit into a third chemical product;
(v) measuring the biogenic carbon content of the first syngas stream and/or the combined syngas stream;
(vi) calculating the deviation between said target biogenic carbon content and the at least one biogenic carbon content measured in step (v);
(vii) adjusting the flow rate of
the first feed stream or
the first feed stream and the flow rate of the first syngas stream and/or the flow rate of the second syngas stream;
(viii) repeating steps (i) to (vii) until said deviation calculated in step (vi) is equal or smaller than a tolerance limit of +/- 50 % for a target biogenic carbon content of up to about 75 %, +/- 20 % for a target biogenic carbon content of about 75 % to about 90 %, and +/- 10 % for a target biogenic carbon content of about > 90 %.

12. Method according to claim 11 wherein only the flow rate of the stream selected from first feed stream and second syngas stream contributing a higher biogenic carbon content to the combined syngas stream per time is adjusted in step (vii).

13. Method according to any of claims 11 and 12 wherein the combined syngas stream formed in step (iv) is further converted in a first further process unit downstream of and fluidically connected to the mixing device into a first chemical product, said first chemical product selected from the group consisting of a combined syngas having a shifted molar ration H₂ : CO, methanol, methane, Fischer-Tropsch hydrocarbons, CO, CO₂ and mixtures of CO and CO₂.

14. Method according to any one of the claims 11 to 13, comprising the step:
- converting the clean syngas, first chemical product, second chemical product and/or the third chemical product obtainable by or obtained by the method according to any one of claims 11 to 13 or a chemical material obtainable by or obtained by the method according to any one of claims 11 to 13 to obtain a monomer, polymer or polymer product.

15. Method according to any one of claims 11 to 14 or the use according to claim 19, wherein the monomer is a di- or polyol; preferably butandiol; aldehyde; preferably formaldehyde; di- or polyisocyanate; preferably methylene diphenyl diisocyanate (MDI), polymeric methylene diphenyl diisocyanate (pMDI), toluene diisocyanate (TDI), hexamethylenediisocyanate (HDI) or isophoronediisocyanate (IPDI); amide; preferably caprolactam; alkene; preferably styrene, ethene and norbornene; alkyne, (di)ester; preferably methyl methacrylate; mono or diacid; preferably adipic acid or terephthalic acid; diamine; preferably hexamethylenediamine, nonanediamine; or sulfones; preferably 4,4'-dichlorodiphenyl sulfone.

16. Method according to any one of claims 11 to 15 or the use according to claim 19, wherein the polymer is and/or the polymer product comprises polyamide (PA); preferably PA 6 or PA 66; polyisocyanate polyaddition product; preferably polyurethane (PU), thermoplastic polyurethane (TPU), polyurea or polyisocyanurate (PIR); low-density polyethylene (LDPE), high-density polyethylene (HDPE), polyethylene (PE), polypropylene (PP), polyvinyl chloride (PVC), polyvinyl acetate (PVA), polystyrene (PS), poly acrylonitrile butadiene styrene (ABS), poly styrene acrylonitrile (SAN), poly acrylate styrene acrylonitrile (ASA), polytetrafluoroethylene (PTFE), poly(methyl acrylate) (PMA), poly(methyl methacrylate) (PMMA), polybutadiene (BR, PBD), poly(cis-1,4-isoprene), poly(trans-1,4-isoprene), polyoxymethylene (POM), polyethylene terephthalate (PET), polybutylene terephthalate (PBT), polybutylene adipate co-terephthalate (PBAT), polyester (PES), polyether sulfone (PESU), polyhydroxyalkanoate (PHA), poly-3-hydroxybutyrate (P3HB), poly-4-hydroxybutyrate (P4HB), polyhydroxyvalerate (PHV), polyhydroxyhexanoate (PHH), polyhydroxyoctanoate (PHO), polylactic acid (PLA), polysulfone (PSU), polyphenylene sulfone (PPSU), polycarbonate (PC), polyether ether ketone (PEEK), poly(p-phenylene oxide) (PPO), poly(p-phenylene ether) (PPE); or copolymer or mixture thereof.

17. Method according to any one of claims 11 to 16 or the use according to claim 19, wherein the polymer and/or the polymer product is/are or is/are a part of:
- a part of a car; preferably cylinder head cover, engine cover, housing for charge air cooler, charge air cooler flap, intake pipe, intake manifold, connector, gear wheel, fan wheel, cooling water box, housing, housing part for heat exchanger, coolant cooler, charge air cooler, thermostat, water pump, radiator, fastening part, part of battery system for electromobility, dashboard, steering column switch, seat, headrest, center console, transmission component, door module, A, B, C or D pillar cover, spoiler, door handle, exterior mirror, windscreen wiper, windscreen wiper protection housing, decorative grill, cover strip, roof rail, window frame, sunroof frame, antenna panel, headlight and taillight, engine cover, cylinder head cover, intake manifold, airbag, cushion, or coating;
- a cloth; preferably shirt, trousers, pullover, boot, shoe, shoe sole, tight or jacket;
- an electrical part; preferably electrical or electronic passive or active component, circuit board, printed circuit board, housing component, foil, line, switch, plug, socket, distributor, relay, resistor, capacitor, inductor, bobbin, lamp, diode, LED, transistor, connector, regulator, integrated circuit (IC), processor, controller, memory, sensor, microswitch, microbutton, semiconductor, reflector housing for light-emitting diodes (LED), fastener for electrical or electronic component, spacer, bolt, strip, slide-in guide, screw, nut, film hinge, snap hook (snap-in), or spring tongue;
- a consumer, agricultural product or pharmaceutical product; preferably tennis string, climbing rope, bristle, brush, artificial grass, 3D printing filament, grass trimmer, zipper, hook and loop fastener, paper machine clothing, extrusion coating, fishing line, fishing net, offshore line and rope, vial, syringe, ampoule, bottle, sliding element, spindle nut, chain conveyor, plain bearing, roller, wheel, gear, roller, ring gear, screw and spring dampers, hose, pipeline, cable sheathing, socket, switch, cable tie, fan wheel, carpet, box or bottle for cosmetics, mattress, cushion, insulation, detergent, dishwasher tabs or powder, shampoo, body wash, shower gel, soap, fertilizer, fungicide, or pesticide;
- a packaging for the food industry; preferably mono- or multi-layer blown film, cast film (mono- or multi-layer), biaxially stretched film, or laminating film; or
- a part of a construction; preferably a rotor blade, insulating material, frame, housing, wall, coating, or separating wall.

18. Method according to any one of claims 11 to 17 or the use according to claim 19,
wherein the content of the first feedstock and/or the second feedstock in the monomer, polymer or polymer product is 1 weight-% or more, preferably 2 weight-% or more, more preferably 5 weight-% or more, more preferably 15 weight-% or more, more preferably 30 weight-% or more, more preferably 40 weight-% or more, more preferably 60 weight-% or more, more preferably 80 weight-% or more, more preferably 90 weight-% or more, more preferably 95 weight-% or more; and/or
wherein the content of the first feedstock and/or the second feedstock in the monomer, polymer or polymer product is 100 weight-% or less, preferably 95 weight-% or less, more preferably 90 weight-% or less, more preferably 50 weight-% or less, more preferably 25 weight-% or less, more preferably 10 weight-% or less; and
preferably wherein the content is determined based on identity preservation and/or segregation and/or mass balance and/or book and claim chain of custody models, preferably based on mass balance, preferably the International Sustainability and Carbon Certification (ISCC) standard.

19. Use of a system according to claims 1 to 10 for the manufacture of at least one chemical product having a target biogenic carbon content of about 0 % to about 100 %, the at least one chemical product selected from the group consisting of methanol, methane, Fischer-Tropsch hydrocarbons, CO, CO₂ and mixtures of CO and CO₂.

20. Use of the system according to any one of claims 1 to 10 to obtain syngas, a monomer, a polymer or a polymer product.

## Patentansprüche

1. System zur Herstellung von Synthesegas und/oder mindestens einem chemischen Produkt mit einem angestrebten biogenen Kohlenstoffgehalt von etwa 0 % bis etwa 100 %, wobei das System umfasst:
- eine Synthesegas-Produktionseinheit, umfassend eine erste Zuführvorrichtung zur Bereitstellung eines ersten Zuführstroms, mindestens einen Vergaser, mindestens eine Synthesegas-Reinigungseinheit zur Bereitstellung eines ersten Synthesegasstroms, eine Mischvorrichtung und eine optionale erste Synthesegasstrom-Prozesseinheit;
wobei der mindestens eine Vergaser der ersten Zuführvorrichtung nachgeschaltet und fluidisch mit dieser verbunden ist, wobei die mindestens eine Synthesegas-Reinigungseinheit dem mindestens einen Vergaser nachgeschaltet und fluidisch mit dem mindestens einen Vergaser verbunden ist,
wobei die Mischvorrichtung der mindestens einen Synthesegas-Reinigungseinheit nachgeschaltet und fluidisch mit dieser verbunden ist und einem zweiten Synthesegasstrom nachgeschaltet und fluidisch mit diesem verbunden ist, oder wobei die Mischvorrichtung der optionalen ersten Synthesegasstrom-Prozesseinheit nachgeschaltet und fluidisch mit dieser verbunden ist und einem zweiten Synthesegasstrom nachgeschaltet und fluidisch mit diesem verbunden ist,
wobei die Mischvorrichtung den ersten Synthesegasstrom und einen zweiten Synthesegasstrom empfängt und wobei ein kombinierter Synthesegasstrom die Mischvorrichtung verlässt, und wobei die optionale erste Synthesegasstrom-Prozesseinheit der mindestens einen Synthesegas-Reinigungseinheit nachgeschaltet und fluidisch mit dieser verbunden ist,
wobei der erste Synthesegasstrom einen ersten biogenen Kohlenstoffgehalt aufweist, der undefiniert ist,
wobei der zweite Synthesegasstrom einen zweiten biogenen Kohlenstoffgehalt aufweist, der definiert ist, wobei der kombinierte Synthesegasstrom einen kombinierten biogenen Kohlenstoffgehalt aufweist, wobei der erste Einsatzstoff fest ist;
- optional eine erste weitere Prozesseinheit, die der Mischvorrichtung nachgeschaltet und fluidisch mit dieser verbunden ist, optional eine zweite weitere Prozesseinheit, die der optionalen ersten weiteren Prozesseinheit nachgeschaltet und fluidisch mit dieser ver-
bunden ist, und optional eine dritte weitere Prozesseinheit, die der optionalen zweiten weiteren Prozesseinheit nachgeschaltet und fluidisch mit dieser verbunden ist, wobei ein erstes chemisches Produkt die optionale erste weitere Prozesseinheit in Strömungsrichtung verlässt, ein zweites chemisches Produkt die optionale zweite weitere Prozesseinheit in Strömungsrichtung verlässt und ein drittes chemisches Produkt die optionale dritte weitere Prozesseinheit in Strömungsrichtung verlässt;
- mindestens ein Messelement zur Messung des biogenen Kohlenstoffgehalts des ersten Synthesegasstroms und/oder des kombinierten Synthesegasstroms;
- eine Steuereinheit zur Anpassung der Zuführdurchflussrate des ersten
Zuführstroms oder
des ersten Zuführstroms und des ersten Synthesegasstroms und/oder des zweiten Synthesegasstroms entsprechend einem biogenen Kohlenstoffgehalt von etwa 0 % bis etwa 100 % des kombinierten Synthesegasstroms.

2. System nach Anspruch 1, wobei das mindestens eine Messelement elektronisch mit der Steuereinheit verbunden ist.

3. System nach Anspruch 1 oder 2, wobei das System mindestens einen Durchflussregler umfasst, der fluidisch mit dem ersten
Zuführstrom oder
dem ersten Zuführstrom und dem ersten Synthesegasstrom und/oder dem zweiten Synthesegasstrom verbunden ist.

4. System nach Anspruch 3, wobei der mindestens eine Durchflussregler elektronisch mit der Steuereinheit verbunden ist.

5. System nach einem der Ansprüche 1 bis 4, wobei das System mindestens ein Messelement umfasst, das fluidisch mit dem ersten Synthesegasstrom und/oder dem kombinierten Synthesegasstrom verbunden ist.

6. System nach einem der Ansprüche 1 bis 5, wobei das System ferner eine erste Synthesegasstrom-Teilungseinheit umfasst, die dem mindestens einen Vergaser oder der mindestens einen Synthesegas-Reinigungseinheit nachgeschaltet und fluidisch mit dieser verbunden ist und der Mischvorrichtung oder der optionalen ersten Synthesegasstrom-Prozesseinheit vorgeschaltet und fluidisch mit dieser verbunden ist, und/oder eine zweite Synthesegasstrom-Teilungseinheit, die dem zweiten Synthesegasstrom nachgeschaltet und fluidisch mit diesem verbunden ist und der Mischvorrichtung vorgeschaltet ist.

7. System nach einem der Ansprüche 1 bis 6, wobei mindestens ein chemisches Produkt mit einem angestrebten biogenen Kohlenstoffgehalt von etwa 0 % bis etwa 100 % ausgewählt ist aus der Gruppe bestehend aus Methanol, Methan, Fischer-Tropsch-Kohlenwasserstoffen, CO, CO₂ und Gemischen aus CO und CO₂.

8. System nach einem der Ansprüche 1 bis 7, wobei die Steuereinheit und das mindestens eine Messelement Teil eines Steuerungssystems sind.

9. System nach Anspruch 8, wobei das Steuerungssystem ferner mindestens einen Regelkreis und mindestens einen Rückkopplungsregler umfasst.

10. System nach einem der Ansprüche 1 bis 9, wobei das System ferner mindestens eine erste weitere Prozesseinheit, die der Mischvorrichtung nachgeschaltet und fluidisch mit dieser verbunden ist, oder eine erste Synthesegasstrom-Verarbeitungseinheit umfasst, die der mindestens einen Synthesegas-Reinigungseinheit nachgeschaltet und fluidisch mit dieser verbunden ist.

11. Verfahren zur Herstellung eines kombinierten Synthesegasstroms und/oder mindestens eines chemischen Produkts aus dem kombinierten Synthesegasstrom mit einem angestrebten biogenen Kohlenstoffgehalt von etwa 0 % bis etwa 100 %, wobei das Verfahren die folgenden Schritte umfasst:
(i) Zuführen eines ersten Zuführstroms eines ersten Einsatzstoffs mit einem ersten biogenen Kohlenstoffgehalt durch eine erste Zuführvorrichtung in einen Vergaser, um einen ersten Synthesegasstrom mit einer Durchflussrate und einem ersten molaren Verhältnis H₂ : CO zu erhalten,
wobei der biogene Kohlenstoffgehalt des ersten Einsatzstoffs und des ersten Synthesegasstroms undefiniert ist, wobei der erste Einsatzstoff fest ist;
(ii) Bereitstellen eines zweiten Synthesegasstroms mit einer Durchflussrate und einem zweiten biogenen Kohlen- stoffgehalt, wobei der zweite biogene Kohlenstoffgehalt definiert ist;
(iii) optionales Ändern des molaren Verhältnisses H2 : CO des ersten Synthesegasstroms auf ein zweites molares Verhältnis H₂ : CO;
(iv) Kombinieren des ersten Synthesegasstroms oder des ersten Synthesegasstroms mit einem zweiten molaren Verhältnis H₂ : CO mit dem zweiten Synthesegasstrom in einer Mischvorrichtung
und dadurch Bilden eines kombinierten Synthesegasstroms mit einem kombinierten biogenen Kohlenstoffgehalt,
optionales Umwandeln des kombinierten Synthesegasstroms in ein erstes chemisches Produkt in einer ersten weiteren Prozesseinheit,
optionales Umwandeln des optionalen ersten chemischen Produkts in einer zweiten weiteren Prozess einheit in ein zweites chemisches Produkt,
optionales Umwandeln des zweiten chemischen Produkts in einer dritten weiteren Prozesseinheit in ein drittes chemisches Produkt;
(v) Messen des biogenen Kohlenstoffgehalts des ersten Synthesegasstroms und/oder des kombinierten Synthesegasstroms;
(vi) Berechnen der Abweichung zwischen dem angestrebten biogenen Kohlenstoffgehalt und dem mindestens einen in Schritt (v) gemessenen biogenen Kohlenstoffgehalt;
(vii) Anpassen der Durchflussrate des ersten
Zuführstroms oder
des ersten Zuführstroms und der Durchflussrate des ersten Synthesegasstroms und/oder der Durchflussrate
des zweiten Synthesegasstroms;
(viii) Wiederholen der Schritte (i) bis (vii), bis die in Schritt (vi) berechnete Abweichung gleich oder kleiner als eine Toleranzgrenze von +/- 50 % für einen angestrebten biogenen Kohlenstoffgehalt von bis zu etwa 75 %, +/- 20 % für einen angestrebten biogenen Kohlenstoffgehalt von etwa 75 % bis etwa 90 % und +/- 10 % für einen angestrebten biogenen Kohlenstoffgehalt von etwa > 90 % ist.

12. Verfahren nach Anspruch 11, wobei in Schritt (vii) nur die Durchflussrate des Stroms angepasst wird, der aus dem ersten Zuführstrom und dem zweiten Synthesegasstrom ausgewählt ist und der pro Zeiteinheit einen höheren biogenen Kohlenstoffgehalt zum kombinierten Synthesegasstrom beiträgt.

13. Verfahren nach einem der Ansprüche 11 und 12, wobei der in Schritt (iv) gebildete kombinierte Synthesegasstrom in einer ersten weiteren Prozesseinheit, die der Mischvorrichtung nachgeschaltet und fluidisch mit dieser verbunden ist, weiter in ein erstes chemisches Produkt umgewandelt wird, wobei das erste chemische Produkt ausgewählt ist aus der Gruppe bestehend aus einem kombinierten Synthesegas mit einem verschobenen molaren Verhältnis H₂ : CO, Methanol, Methan, Fischer-Tropsch-Kohlenwasserstoffen, CO, CO₂ und Gemischen aus CO und CO₂.

14. Verfahren nach einem der Ansprüche 11 bis 13, umfassend den Schritt:
- Umwandeln des Reingases, des ersten chemischen Produkts, des zweiten chemischen Produkts und/oder des dritten chemischen Produkts, das durch das Verfahren nach einem der Ansprüche 11 bis 13 erhältlich ist oder erhalten wurde, oder eines chemischen Materials, das durch das Verfahren nach einem der Ansprüche 11 bis 13 erhältlich ist oder erhalten wurde, um ein Monomer, Polymer oder Polymerprodukt zu erhalten.

15. Verfahren nach einem der Ansprüche 11 bis 14 oder die Verwendung nach Anspruch 19, wobei das Monomer ein Di- oder Polyol ist; vorzugsweise Butandiol; Aldehyd; vorzugsweise Formaldehyd; Di- oder Polyisocyanat; vorzugsweise Methylendiphenyldiisocyanat (MDI), polymeres Methylendiphenyldiisocyanat (pMDI), Toluoldiisocyanat (TOI), Hexa-methylendiisocyanat (HDI) oder Isophorondiisocyanat (IPDI); Amid; vorzugsweise Caprolactam; Alken; vorzugsweise Styrol, Ethen und Norbornen; Alkin, (Di)ester; vorzugsweise Methylmethacrylat; Mono- oder Disäure; vorzugsweise Adipinsäure oder Terephthalsäure; Diamin; vorzugsweise Hexamethylendiamin, Nonandiamin; oder Sulfone; vorzugsweise 4,4'-Dichlordiphenylsulfon.

16. Verfahren nach einem der Ansprüche 11 bis 15 oder die Verwendung nach Anspruch 19, wobei das Polymer und/oder das Polymerprodukt Polyamid (PA) umfasst; vorzugsweise PA 6 oder PA 66; Polyisocyanat-Polyadditionsprodukt; vorzugsweise Polyurethan (PU), thermoplastisches Polyurethan (TPU), Polyharnstoff oder Polyisocyanurat (PIR); Polyethylen niedriger Dichte (LOPE), Polyethylen hoher Dichte (HOPE), Polyethylen (PE), Polypropylen (PP), Polyvinylchlorid (PVC), Polyvinylacetat (PVA), Polystyrol (PS), Polyacryloni-tril-Butadien-Styrol (ABS), Polystyrol-Acrylnitril (SAN), Polyacrylat-Styrol-Acrylnitril (ASA), Polytetrafluorethylen (PTFE), Poly(methylacrylat) (PMA), Poly(methylmethacrylat) (PMMA), Polybutadien (BR, PBD), Poly(cis-1,4-isopren), Poly(trans-1,4- isopren), Polyoxymethylen (POM), Polyethylenterephthalat (PET),
Polybutylenterephthalat (PBT), Polybutylen-Adipat-co-Terephthalat (PBAT), Polyester (PES), Polyethersulfon (PESU), Polyhydroxyalkanoat (PHA), Poly-3-hydroxybutyrat (P3HB), Poly-4-hydroxybutyrat (P4HB), Polyhydroxyvalerat (PHV), Polyhydroxyhexanoat (PHH), Polyhydroxyoctanoat (PHO), Polymilchsäure (PLA), Polysulfon (PSU), Polyphenylensulfon (PPSU), Polycarbonat (PC), Polyetheretherketon (PEEK), Poly(p-phenylenoxid) (PPO), Poly(p-phenylenether) (PPE); oder Copolymer oder Gemisch davon.

17. Verfahren nach einem der Ansprüche 11 bis 16 oder die Verwendung nach Anspruch 19, wobei das Polymer und/oder das Polymerprodukt ist/sind oder Teil ist/sind von:
- einem Teil eines Kraftfahrzeugs; vorzugsweise Zylinderkopfdeckel, Motorabdeckung, Gehäuse für Ladeluftkühler, Ladeluftkühlerklappen, Ansaugrohr, Ansaugkrümmer, Verbinder, Zahnrad, Lüfterrad, Kühlwasserbehälter, Gehäuse, Gehäuseteil für Wärmetauscher, Kühlmittelkühler, Ladeluftkühler, Thermostat, Wasserpumpe, Kühler, Befestigungsteil, Teil des Batteriesystems für Elektromobilität, Armaturenbrett, Lenksäulenschalter, Sitz, Kopfstütze, Mittelkonsole, Getriebekomponente, Türmodul, A, B, C oder D Säulenverkleidung, Spoiler, Türgriff, Außenspiegel, Scheibenwischer, Scheibenwischer-Schutzgehäuse, Ziergrill, Abdeckleiste, Dachträger, Fensterrahmen, Schiebedachrahmen, Antennenpanel, Scheinwerfer und Rückleuchten, Motorabdeckung, Zylinderkopfdeckel, Ansaugkrümmer, Airbag, Polsterung oder Beschichtung;
- einem Kleidungsstück; vorzugsweise Hemd, Hose, Pullover, Stiefel, Schuh, Schuhsohle, Strumpfhose oder Jacke;
- einem elektrischen Teil; vorzugsweise elektrisches oder elektronisches passives oder aktives Bauteil, Leiterplatte, gedruckte Leiterplatte, Gehäusekomponente, Folie, Leitung, Schalter, Stecker, Buchse, Verteiler, Relais, Widerstand, Kondensator, Induktivität, Spulenkörper, Lampe, Diode, LED, Transistor, Verbinder, Regler, integrierter Schaltkreis (IC), Prozessor, Steuerung, Speicher, Sensor, Mikroschalter, Mikrotaster, Halbleiter, Reflektorgehäuse für Leuchtdioden (LED), Befestiger für elektrische oder elektronische Bauteile, Abstandshalter, Bolzen, Leiste, Einschubführung, Schraube, Mutter, Filmgelenk, Schnapphaken (Snap-in) oder Federzunge;
- einem Verbraucher-, Agrar- oder Pharmazieprodukt; vorzugsweise Tennissaite, Kletterseil, Borste, Bürste, Kunstgras, 3D-Druckfilament, Rasentrimmer, Reißverschluss, Klettverschluss, Papiermaschinenbespannung, Extrusionsbeschichtung, Angelschnur, Fischernetz, Offshore-Leine und -Seil, Fläschchen, Spritze, Ampulle, Flasche, Gleitelement, Spindelmutter, Kettenförderer, Gleitlager, Rolle, Rad, Zahnrad, Walze, Hohlrad, Schraub- und Federdämpfer, Schlauch, Rohrleitung, Kabelummantelung, Buchse, Schalter, Kabelbinder, Lüfterrad, Teppich, Behälter oder Flasche für Kosmetika, Matratze, Polsterung, Dämmung, Waschmittel, Spülmaschinentabs oder -pulver, Shampoo, Körperwaschmittel, Duschgel, Seife, Düngemittel, Fungizid oder Pestizid;
- einer Verpackung für die Lebensmittelindustrie; vorzugsweise ein- oder mehrschichtige Blasfolie, Gießfolie (ein- oder mehrschichtig), biaxial gestreckte Folie oder Kaschierfolie; oder
- einem Teil eines Bauwerks; vorzugsweise ein Rotorblatt, Dämmmaterial, Rahmen, Gehäuse, Wand, Beschichtung oder Trennwand.

18. Verfahren nach einem der Ansprüche 11 bis 17 oder die Verwendung nach Anspruch 19, wobei der Gehalt des ersten Einsatzstoffs und/oder des zweiten Einsatzstoffs im Monomer, Polymer oder Polymerprodukt 1 Gewichts-% oder mehr beträgt, vorzugsweise 2 Gewichts-% oder mehr, bevorzugter 5 Gewichts-% oder mehr, bevorzugter 15 Gewichts-% oder mehr, bevorzugter 30 Gewichts-% oder mehr, bevorzugter 40 Gewichts-% oder mehr, bevorzugter 60 Gewichts-% oder mehr, bevorzugter 80 Gewichts-% oder mehr, bevorzugter 90 Gewichts-% oder mehr, bevorzugter 95 Gewichts-% oder mehr; und/oder wobei der Gehalt des ersten Einsatzstoffs und/oder des zweiten Einsatzstoffs im Monomer, Polymer oder Polymerprodukt 100 Gewichts-% oder weniger beträgt,
vorzugsweise 95 Gewichts-% oder weniger,
bevorzugter 90 Gewichts-% oder weniger, bevorzugter 50 Gewichts-% oder weniger, bevorzugter 25 Gewichts-% oder weniger, bevorzugter 10 Gewichts-% oder weniger; und
vorzugsweise wobei der Gehalt auf der Grundlage von Identitätserhaltung und/oder Segregation und/oder Massenbilanz und/oder Book-and-Claim-Lieferketten-Modellen bestimmt wird, vorzugsweise auf der Grundlage der Massenbilanz, vorzugsweise des International Sustainability and Carbon Certifica-
tion (ISCC)-Standards.

19. Verwendung eines Systems nach den Ansprüchen 1 bis 10 zur Herstellung mindestens eines chemischen Produkts mit einem angestrebten biogenen Kohlenstoffgehalt von etwa 0 % bis etwa 100 %, wobei das mindestens eine chemische Produkt ausgewählt ist aus der Gruppe bestehend aus Methanol, Methan, Fischer-Tropsch-Kohlenwasserstoffen, CO, CO₂ und Gemischen aus CO und CO₂.

20. Verwendung des Systems nach einem der Ansprüche 1 bis 10 zur Gewinnung von Synthesegas, einem Monomer, einem Polymer oder einem Polymerprodukt.

## Revendications

1. Système pour produire du gaz de synthèse et/ou au moins un produit chimique ayant une teneur en carbone biogénique cible d'environ 0 % à environ 100 %, le système comprenant :
- une unité de production de gaz de synthèse comprenant un premier dispositif d'alimentation pour fournir un premier flux d'alimentation, au moins un gazéifieur, au moins une unité de purification de gaz de synthèse pour fournir un premier flux de gaz de synthèse, un dispositif de mélange et une unité de traitement optionnelle du premier flux de gaz de synthèse ;
dans lequel le au moins un gazéifieur est en aval et fluidiquement connecté au premier dispositif d'alimentation, dans lequel la au moins une unité de purification du gaz de synthèse est en aval et
fluidiquement connecté au moins à un gazéifieur,
dans lequel ledit dispositif de mélange est en aval de et fluidiquement connecté à l'au moins une unité de purification de gaz de synthèse et en aval de et fluidiquement connecté à un second flux de gaz de synthèse, ou dans lequel ledit dispositif de mélange est en aval de et fluidiquement connecté à ladite unité de traitement de flux de gaz de synthèse premier optionnel et en aval de et fluidiquement connecté à
ledit deuxième flux de gaz de synthèse, dans lequel ledit dispositif de mélange reçoit ledit premier flux de gaz de synthèse et un deuxième flux de gaz de synthèse et dans lequel un flux de gaz de synthèse combiné quitte ledit dispositif de mélange, et dans lequel l'unité de traitement optionnelle du premier flux de gaz de synthèse est en aval flux de et fluidiquement connecté à l'au moins une unité de purification du gaz de synthèse,
dans lequel ledit premier flux de gaz de synthèse a une première teneur en carbone biogénique qui est indéfinie,
dans lequel ledit deuxième flux de gaz de synthèse présente une deuxième teneur en carbone biogénique qui est définie, dans lequel ledit flux de gaz de synthèse combiné présente une teneur en carbone biogénique combinée, dans lequel ladite première charge d'alimentation est solide ;
- optionnellement une première unité de traitement supplémentaire en aval du dispositif de mélange et fluidiquement connectée à celui-ci, optionnellement une deuxième unité de traitement supplémentaire en aval et fluidiquement con-
nectée à la première unité de traitement supplémentaire optionnelle et optionnellement une troisième unité de traitement supplémentaire en aval de et fluidiquement connectée à la deuxième unité de traitement supplémentaire optionnelle, dans laquelle un premier produit chimique quitte la première unité de traitement supplémentaire optionnelle dans la direction aval, un deuxième produit chimique quitte la deuxième unité de traitement supplémentaire optionnelle dans la direction aval, et un troisième produit chimique quitte la troisième unité de traitement supplémentaire optionnelle-autre unité de traitement en aval ;
- au moins un élément de mesure pour mesurer la teneur en carbone biogénique du premier flux de gaz de synthèse et/ou du flux de gaz de synthèse combiné ;
- une unité de contrôle pour ajuster le débit
d'alimentation du premier flux d'alimentation
ou
du premier flux d'alimentation et du premier flux de gaz de synthèse et/ou du deuxième flux de gaz de synthèse selon une teneur en carbone biogénique d'environ 0 % à environ 100 % du flux de gaz de synthèse combiné.

2. Système selon la revendication 1, dans lequel le au moins un élément de mesure est connecté électroniquement à l'unité de commande.

3. Système selon la revendication 1 ou 2 dans lequel le système comprend au moins un contrôle de débit-ler qui est fluidiquement connecté au
premier flux d'alimentation ou
le premier flux d'alimentation et le premier flux de gaz de synthèse et/ou le deuxième flux de gaz de synthèse.

4. Système selon la revendication 3, dans lequel l'au moins un régulateur de débit est connecté électroniquement à l'unité de commande.

5. Système selon l'une quelconque des revendications 1 à 4, dans lequel le système comprend au moins un élément de mesure qui est connecté fluidiquement au premier flux de gaz de synthèse et/ou au flux de gaz de synthèse combiné.

6. Système selon l'une quelconque des revendications 1 à 5, dans lequel le système comprend en outre une unité de division du premier flux de gaz de synthèse qui est en aval de et connectée fluidiquement à l'au moins un gazéifieur ou à l'au moins une unité de purification de gaz de synthèse et en amont de et connectée fluidiquement au dispositif de mélange ou à l'unité de traitement optionnelle du premier flux de gaz de synthèse et/ou une deuxième unité de division du flux de gaz de synthèse qui est en aval de et connectée fluidiquement au deuxième flux de gaz de synthèse et en amont du dispositif de mélange.

7. Système selon l'une quelconque des revendications 1 à 6, dans lequel au moins un produit chimique ayant une teneur en carbone biogénique cible d'environ 0 % à environ 100 % est sélectionné dans le groupe constitué du méthanol, du méthane, des hydrocarbures Fischer-Tropsch, du CO, du CO₂ et des mélanges de CO et de CO₂.

8. Système selon l'une quelconque des revendications 1 à 7, dans lequel l'unité de commande et l'au moins un élément de mesure font partie d'un système de contrôle.

9. Système selon la revendication 8, dans lequel le système de contrôle comprend en outre au moins une boucle de contrôle et au moins un régulateur à rétroaction.

10. Système selon l'une quelconque des revendications 1 à 9, dans lequel le système comprend en outre au moins une première unité de traitement supplémentaire en aval de et connectée fluidiquement au dispositif de mélange ou une première unité de traitement du flux de gaz de synthèse en aval de et connectée fluidiquement à l'au moins une unité de purification de gaz de synthèse.

11. Procédé pour produire un flux de gaz de synthèse combiné et/ou au moins un produit chimique à partir dudit flux de gaz de synthèse combiné ayant une teneur en carbone biogénique cible d'environ 0 % à environ 100 %, le procédé comprenant les étapes suivantes :
(i) alimenter un premier flux d'alimentation d'une première matière première ayant une première teneur en carbone biogénique
à travers un premier dispositif d'alimentation dans un gazéifieur pour obtenir un premier flux de gaz de synthèse avec un débit et un premier rapport molaire H₂ : CO, dans lequel la teneur en carbone biogénique de la première matière première et du premier flux de gaz de synthèse est indéfinie, ladite première matière première étant solide ;
(ii) fournir un deuxième flux de gaz de synthèse avec un débit et une deuxième teneur en carbone biogénique, dans lequel la deuxième teneur en carbone biogénique est définie;
(iii) modifier optionnellement le rapport molaire H₂ : CO du premier flux de gaz de synthèse en un deuxième rapport molaire H₂ : CO ;
(iv) combiner le premier flux de gaz de synthèse ou le premier flux de gaz de synthèse avec un deuxième rapport molaire H₂ : CO avec le deuxième flux de gaz de synthèse dans un dispositif de mélange
et former ainsi un flux de gaz de synthèse combiné ayant une teneur en carbone biogénique combinée,
convertissant optionnellement ledit flux de gaz de synthèse combiné en un premier produit chimique dans une première unité de traitement supplémentaire, convertissant optionnellement ledit premier produit chimique optionnel dans un deuxième traitement supplémentaire
unité en un deuxième produit chimique,
convertissant optionnellement ledit deuxième produit chimique dans une troisième unité de traitement supplémentaire en un troisième produit chimique ;
(v) mesurant la teneur en carbone biogénique du premier flux de gaz de synthèse et/ou du flux de gaz de synthèse combiné ;
(vi) calculant l'écart entre ladite teneur cible en carbone biogénique et la ou les teneurs en carbone biogénique mesurées à l'étape (v) ;
(vii) ajustant le débit du
premier flux
d'alimentation ou
le premier flux d'alimentation et le débit du premier flux de gaz de synthèse et/ou le débit du deuxième flux de gaz de synthèse ;
(viii) répétant les étapes (i) à (vii) jusqu'à ce que ledit écart calculé à l'étape (vi) soit égal ou inférieur à une limite de tolérance de +/- 50 % pour une teneur cible en carbone biogénique allant jusqu'à environ 75 %, +/- 20 % pour une teneur cible en carbone biogénique d'environ 75 % à environ 90 %, et +/- 10 % pour une teneur cible en carbone biogénique d'environ > 90 %.

12. Procédé selon la revendication 11, dans lequel seul le débit du flux sélectionné parmi le premier flux d'alimentation et le deuxième flux de gaz de synthèse contribuant à une teneur en carbone biogénique plus élevée dans le flux de gaz de synthèse combiné par unité de temps est ajusté à l'étape (vii).

13. Procédé selon l'une quelconque des revendications 11 et 12, dans lequel le flux de gaz de synthèse combiné formé à l'étape (iv) est en outre converti dans une première unité de traitement supplémentaire en aval du dispositif de mélange et raccordée fluidiquement à celui-ci en un premier produit chimique, ledit premier produit chimique sélectionné dans le groupe constitué d'un gaz de synthèse combiné ayant un rapport molaire décalé H₂ : CO, méthanol, méthane, hydrocarbures de Fischer-Tropsch, CO, CO₂ et mélanges de CO et CO₂.

14. Procédé selon l'une quelconque des revendications 11 à 13, comprenant l'étape :
- convertissant le gaz de synthèse épuré, le premier produit chimique, le deuxième produit chimique et/ou le troisième produit chimique pouvant être obtenu par ou obtenu par le procédé selon l'une quelconque des revendications 11 à 13 ou un matériau chimique pouvant être obtenu par ou obtenu par le procédé selon l'une quelconque des revendications 11 à 13 pour obtenir un monomère, un polymère ou un produit polymère.

15. Procédé selon l'une quelconque des revendications 11 à 14 ou l'utilisation selon la revendication 19, dans lequel le monomère est un di- ou polyol ; de préférence le butanediol ; un aldéhyde ; de préférence le formaldéhyde ; un di- ou polyisocyanate ; de préférence le diisocyanate de méthylène diphényle (MDI), le diisocyanate de méthylène diphényle polymérique (pMDI), le diisocyanate de toluène (TOI), le diisocyanate de méthylène hexaméthylène (HDI) ou le diisocyanate d'isophorone (IPDI) ; un amide ; de préférence la caprolactame ; un alcène ; de préférence le styrène, l'éthène et le norbornène ; un alcyne, un (di)ester ; de préférence le méthacrylate de méthyle ; un mono- ou diacide ; de préférence l'acide adipique ou l'acide téréphtalique ; une diamine ; de préférence l'hexaméthylènediamine, la nonanediamine ; ou des sulfones ; de préférence la 4,4'-dichlorodiphényl sulfone.

16. Procédé selon l'une quelconque des revendications 11 à 15 ou l'utilisation selon la revendication 19, dans lequel le polymère est et/ou le produit polymère comprend un polyamide (PA) ; de préférence PA 6 ou PA 66 ; un produit de polyaddition de polyisocyanate ; de préférence un polyuréthane (PU), un polyuréthane thermoplastique (TPU), une polyurée ou un polyisocyanurate (PIR) ; un polyéthylène basse densité (LOPE), un polyéthylène haute densité (HOPE), un polyéthylène (PE), un polypropylène (PP), un polychlorure de vinyle (PVC), un polyacétate de vinyle (PVA), un polystyrène (PS), un polyacryloni-trile butadiène styrène (ABS), poly styrène acrylonitrile (SAN), poly acrylate styrène acrylonitrile (ASA), polytétrafluoroéthylène (PTFE), poly(acrylate de méthyle) (PMA), poly(méthacrylate de méthyle) (PMMA), polybutadiène (BR, PBD), poly(cis-1,4-isoprène), poly(trans-1,4-isoprène), polyoxyméthylène (POM), polyéthylène téréphtalate (PET), polybutylène téréphtalate (PBT), polybutylène adipate co-téréphtalate (PBAT), polyester (PES), polyéther sulfone (PESU), polyhydroxyalcanoate (PHA), poly-3-hydroxybutyrate (P3HB), poly-4-hydroxybutyrate (P4HB), polyhydroxyvalérate (PHV), polyhydroxyhexanoate (PHH), polyhydroxyoctanoate (PHO), acide polylactique (PLA), polysulfone (PSU), polyphénylène sulfone (PPSU), polycarbonate (PC), polyéther éther cétone (PEEK), poly(p-phénylène oxyde) (PPO), poly(p-phénylène éther) (PPE) ; ou copolymère ou mélange de ceux-ci.

17. Procédé selon l'une quelconque des revendications 11 à 16 ou l'utilisation selon la revendication 19, dans lequel le polymère et/ou le produit polymère est/sont ou fait/font partie de :
- une pièce de voiture ; de préférence couvercle de culasse, couvercle de moteur, boîtier pour refroidisseur d'air de suralimentation, volet de refroidisseur d'air de suralimentation, tuyau d'admission, collecteur d'admission, connecteur, roue dentée, roue de ventilateur, boîte à eau de refroidissement, boîtier, partie de boîtier pour échangeur de chaleur, refroidisseur de liquide de refroidissement, refroidisseur d'air de suralimentation, thermostat, pompe à eau, radiateur, pièce de fixation, partie de système de batterie pour l'électromobilité, tableau de bord, commutateur de colonne de direction, siège, appuie-tête, console centrale, composant de transmission, module de porte, couvre-montant A, B, C ou D, spoiler, poignée de porte, rétroviseur extérieur, essuie-glace, boîtier de protection d'essuie-glace, grille décorative, bande de recouvrement, rail de toit, cadre de fenêtre, cadre de toit ouvrant, panneau d'antenne, phare avant et feu arrière, couvercle de moteur, couvercle de culasse, collecteur d'admission, airbag, coussin ou revêtement ;
- un tissu ; de préférence chemise, pantalon, pull-over, botte, chaussure, semelle de chaussure, collant ou veste ;
- une pièce électrique ; de préférence composant électrique ou électronique passif ou actif, circuit imprimé, carte de circuit imprimé, composant de boîtier, feuille, ligne, interrupteur, fiche, prise, distributeur, relais, résistance, condensateur, inducteur, bobine, lampe, diode, LED, transistor, connecteur, régulateur, circuit intégré (CI), processeur, contrôleur, mémoire, capteur, microinterrupteur, microbouton, semi-conducteur, boîtier réflecteur pour diodes électroluminescentes (LED), fixation pour composant électrique ou électronique, entretoise, boulon, barrette, guide coulissant, vis, écrou, charnière souple, crochet d'encliquetage (snap-in) ou languette à ressort ;
- un produit de consommation, agricole ou pharmaceutique ; de préférence corde de tennis, corde d'escalade, soie, brosse, gazon artificiel, filament d'impression 3D, coupe-bordures, fermeture à glissière, fermeture à crochets et à boucles, habillage de machine à papier, revêtement par extrusion, fil de pêche, filet de pêche, ligne et corde offshore, flacon, seringue, ampoule, bouteille, élément coulissant, écrou à broche, convoyeur à chaîne, palier lisse, rouleau, roue, engrenage, rouleau, couronne dentée, amortisseurs à vis et à ressort, tuyau, canalisation, gaine de câble, prise, interrupteur, collier de câble, roue de ventilateur, tapis, boîte ou flacon pour cosmétiques, matelas, coussin, isolation, détergent, tablettes ou poudre pour lave-vaisselle, shampooing, gel douche, gel douche, savon, engrais, fongicide ou pesticide ;
- un emballage pour l'industrie alimentaire ; de préférence film soufflé mono- ou multicouche, film coulé (mono- ou multicouche), film à orientation biaxiale ou film de stratification ; ou
- - une partie d'une construction ; de préférence une pale de rotor, un matériau isolant, un cadre, un boîtier, une paroi, un revêtement ou une paroi de séparation.

18. Procédé selon l'une quelconque des revendications 11 à 17 ou l'utilisation selon la revendication 19, dans lequel la teneur de la première matière première et/ou de la deuxième matière première dans le monomère, le polymère ou le produit polymère est de 1 % en poids ou plus, de préférence 2 % en poids ou plus, plus préférablement 5 % en poids ou plus, plus préférablement 15 % en poids ou plus, plus préférablement 30 % en poids ou plus, plus préférablement 40 % en poids ou plus, plus préférablement 60 % en poids-% ou plus, plus préférablement 80 % en poids ou plus, plus préférablement 90 % en poids ou plus, plus préférablement 95 % en poids ou plus ; et/ou
dans lequel la teneur de la première matière première et/ou de la deuxième matière première dans le monomère, le polymère ou le produit polymère est de 100 % en poids ou moins, de préférence 95 % en poids ou moins, plus préférablement 90 % en poids ou moins, plus préférablement 50 % en poids ou moins, plus préférablement 25 % en poids ou moins, plus préférablement 10 % en poids ou moins ; et de préférence dans lequel la teneur est déterminée sur la base de la préservation de l'identité et/ou de la ségrégation et/ou du bilan massique et/ou de modèles de chaîne de traçabilité par enregistrement comptable, de préférence sur la base du bilan massique, de préférence la certification internationale de durabilité et de carbone-(ISCC) standard.

19. Utilisation d'un système selon les revendications 1 à 10 pour la fabrication d'au moins un produit chimique ayant une teneur en carbone biogénique cible d'environ 0 % à environ 100 %, le au moins un produit chimique sélectionné dans le groupe constitué du méthanol, du méthane, des hydrocarbures de Fischer-Tropsch, du CO, du CO₂ et des mélanges de CO et de CO₂.

20. Utilisation du système selon l'une quelconque des revendications 1 à 10 pour obtenir du gaz de synthèse, un monomère, un polymère ou un produit polymère.
